Europäisches Patentamt

European Patent Office

Office européen des brevets

(19)

(11) **EP 1 298 555 A1**

(12) **EUROPEAN PATENT APPLICATION**
published in accordance with Art. 158(3) EPC

(43) Date of publication:
**02.04.2003 Bulletin 2003/14**

(21) Application number: **01926048.8**

(22) Date of filing: **27.04.2001**

(51) Int Cl.⁷: **G06F 17/60**, G06F 19/00, B09B 3/00

(86) International application number:
**PCT/JP01/03723**

(87) International publication number:
**WO 01/084407 (08.11.2001 Gazette 2001/45)**

(84) Designated Contracting States:
**DE FI FR GB SE**

(30) Priority: **27.04.2000 JP 2000128426**

(71) Applicant: **NEC Corporation**
**Minato-ku, Tokyo 108-8001 (JP)**

(72) Inventors:
• **FUJITA, Hiroyoshi, c/o NEC Corporation**
**Tokyo 108-8001 (JP)**
• **KUSAKAWA, Naoki, c/o NEC Corporation**
**Tokyo 108-8001 (JP)**
• **KIKUMA, Yoshinori, c/o NEC Corporation**
**Minato-ku, Tokyo (JP)**
• **MATSUNAGA, Hiromi**
**Minato-ku, Tokyo (JP)**

(74) Representative: **VOSSIUS & PARTNER**
**Siebertstrasse 4**
**81675 München (DE)**

(54) **ENVIRONMENT INFORMATION SIMULATION SYSTEM, DEVICE, AND METHOD, AND RECORDED MEDIUM**

(57) A system comprising a database for registering parts environment information in advance; search means for searching the database for a part constituting a product; calculation means for calculating an environment information evaluation value of the part by using environment information in the database if one is found as a result of the search, or by averaging environment information of a part of the same type or the same material as the search target part registered in the database if environment information of the search target part is not registered in the database; and output means for outputting an environment information evaluation value calculated for the product.

FIG. 3

## Description

Technical Field

The present invention relates to an environment evaluation technique and in particular, to a system, a method, a recording medium, and a program for evaluating environment information related to an amount of a predetermined chemical substance contained in a product for a product supplier providing apparatuses and products.

Background Art

Recently, as an ecology-action plan, product suppliers should perform, for example, the following as a target of environment effect related to products. It should be noted that descriptions in the following parentheses indicate specific examples.

- Earth warming prevention (reduction of power consumption, execution of LCA)
- Resource recycle (recycle, increase of use of recycled plastic)
- Greening (reduction of lead solder, vinyl chloride and the like)

In the above, LCA (life cycle assessment) is to grasp and to manage or control an amount of $CO_2$ which is generated during production of a product until disposal of the product and which brings about earth warming.

Moreover, on the side of a customer who receives a product from a supplier, more and more customers promote to purchase products which consider the effect to the environment. There are also customers who decide a product supply guideline and demand environment index data of a product when the product is delivered from a supplier.

For such a product delivery guideline, product suppliers are performing necessary environment countermeasures such as:

- Unification of parts material and selection
- Suppressing use of harmful substances and controlling an amount of harmful substances contained
- Indication of raw material names
- Energy saving

As has been described above, it is necessary for product suppliers to satisfy environmental condition.

By the way, environment information control is comparatively advanced in the large-amount production industry such as personal computers and mobile telephones but the industry of small-amount many-type production is insufficiently advanced about the environment information control.

This is because in the industry of small-amount many-type production, an enormous number of parts are used and collecting environment risk information of all the parts requires an enormous number of steps. Practically, realization is substantially impossible only by making an effort by a single enterprise.

Disclosure of the Invention

It is therefore an object of the present invention to provide a system, an apparatus, a method, and a recording medium capable of evaluating environment information of a product with a high accuracy even when collection of environment information is insufficient.

Another object of the present invention is to provide a system, an apparatus, a method, and a recording medium capable of fetching environment information evaluation data of a product at a stage of trial production.

Still another object of the present invention is to provide a system, an apparatus, a method, and a recording medium capable of providing environment information in accordance with a customer control principle when submitting environment information of a product delivered to the customer.

Yet another object of the present invention is to provide a system, an apparatus, a method, a recording medium, and a program for supporting green design in a product (apparatus) supplier.

Yet still another object of the present invention is to provide a system, an apparatus, a method, and a recording medium for facilitating construction of a database storing environment information, and reducing TOC.

Other objects, features, and merits will become clear for those skilled in the art from description of embodiments given below.

In order to achieve the aforementioned objects, the present invention comprises: a database for registering parts environment information in advance; search means for searching the database for a part constituting a product; calculation means for calculating an environment information evaluation value of the part by using environment information in the database if one is found as a result of the search, or by averaging environment information of a part of the same type or the same material as the search target part registered in the database if environment information of the search target part is not registered in the database; and output means for outputting an environment information evaluation value calculated for the product.

The aforementioned objects can also be achieved by the invention disclosed in claims as will become clear from description given below.

Furthermore, when using parts considering the environment, it is difficult to evade increase of the production cost. To cope with this, the aforementioned system for calculating an environment information evaluation value is linked to a parts information system containing cost information of parts, so as to select an optimal part with respect to the environment and the cost and perform simulation on a unit and product level. By performing this simulation repeatedly, it is possible to design a product considering the environment at a reduced cost.

Brief Description of the Drawings

Fig. 1 shows a basic structure of a system according to an embodiment of the present invention.

Fig. 2 explains an actual application of the system according to the embodiment of the present invention.

Fig. 3 shows a system structure according to an embodiment of the present invention.

Fig. 4 shows a database according to an embodiment of the present invention.

Fig. 5 explains a feature (1) of the database according to the embodiment of the present invention.

Fig. 6 explains a feature (2) of the database according to the embodiment of the present invention.

Fig. 7 explains a feature (3) of the database according to the embodiment of the present invention.

Fig. 8 explains a feature (4) of the database according to the embodiment of the present invention.

Fig. 9 explains features (5) and (6) of the database according to the embodiment of the present invention.

Fig. 10 explains a feature (7) of the database according to the embodiment of the present invention.

Fig. 11 explains a feature (8) of the database according to the embodiment of the present invention.

Fig. 12 explains characteristic of simulation in the embodiment of the present invention.

Fig. 13 shows an example of a product name code list as a simulation result according to the embodiment of the present invention.

Fig. 14 shows an example of a harmful substance list as a simulation result according to the embodiment of the present invention.

Fig. 15 shows an example of an LCA report as one of report outputs according to the embodiment of the present invention.

Fig. 16 shows an example of a harmful substance content report as one of the report outputs according to the embodiment of the present invention.

Fig. 17 shows a procedure flow of a new design work in the embodiment of the present invention.

Fig. 18 shows a procedure flow of a designed work in the embodiment of the present invention.

Fig. 19 shows a procedure of creating new design constituting data in the embodiment of the present invention.

Fig. 20 shows a transfer procedure flow of new design constituting data in the embodiment of the present invention.

Fig. 21 shows a simulation execution procedure flow in the embodiment of the present invention.

Fig. 22 shows a simulation execution procedure flow in the embodiment of the present invention.

Fig. 23 shows a simulation execution (average harmful substance content calculation) procedure flow in the embodiment of the present invention.

Fig. 24 shows a report data creation procedure flow in the embodiment of the present invention.

Fig. 25 is a block diagram explaining a basic structure of a system according to another embodiment of the present invention.

Best Mode for Carrying out the Invention

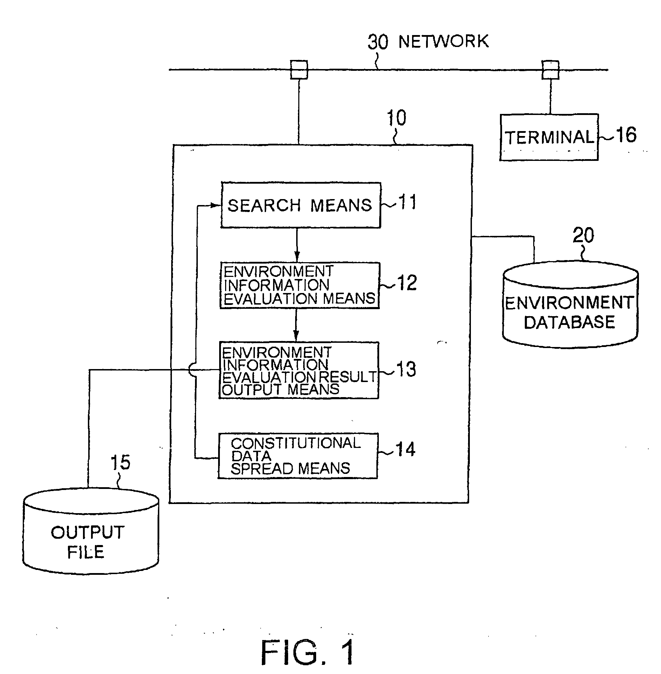

Description will now be directed to an embodiment of the present invention. Fig. 1 shows a basic structure of a system according to an embodiment of the present invention.

Referring to Fig. 1, the system (hereinafter, referred to as environment simulation system) as the embodiment of the present invention includes as basic components: an environment information evaluation apparatus 10; a database (referred to as "environment database") 20 in which environment information of parts of a product is registered in advance; and an output fife 15.

As shown in Fig. 1, the environment information evaluation apparatus 10 has search means 11, environment information evaluation means 12, environment information evaluation result output means 13, and constituting data spread means 14. The search means 11 searches a part constituting a product in the database 20. When environment information of the part is found in the database 20 as a result of the search by the search means 11, the environment information evaluation means 12 uses the environment information, and when no environment information of the part is contained in the database 20, environment information averaging is performed for parts of the same type or parts made from the same material as the parts whose environment information is contained in the database 20, thereby calculating an environment information evaluation value of the part constituting the product (apparatus). Moreover, the environment information evaluation result output means 13 accumulates the environment information of the aforementioned parts, thereby outputting the environment information evaluation result calculated for the product whose environment information is to be calculated, to the output file 15 or the like.

This environment simulation system is preferably constructed on a server connected to a network 30 such as the Internet or the Intranet (LAN) and accessed via the network 30 from a client terminal 16 so as to utilize a desired function of the environment information evaluation apparatus 10.

Moreover, the environment information evaluation apparatus 10 of the present invention has constituting data spread means 14 for spreading apparatus constituting data stored in a hierarchical structure up to the lowest level. For example, when an apparatus product is constituted by a plurality of substrates, each of which has a plurality of circuit blocks, each having parts such as an IC and discrete element, the apparatus constituting data spread means 14 spreads up to the parts of the lowest level as the apparatus constituting data according to the aforementioned constituting data. It should be noted that data registration in the database 20 itself is performed by using a known database management system (not depicted).

For the parts spread by the constituting data spread means 14, the database 20 is searched by the search means 11, thereby performing the environment information evaluation.

In the embodiment of the present invention, a product development/design department utilizes (searches) a component information system (CIS) when selecting a component, so as to select a component considering the environment. Such a design is called "green design".

In the present embodiment, the search means 11, the environment information evaluation means 12, the environment information evaluation result output means 13, and the constituting data spread means 14 are processed and their functions are realized by a program executed on a computer constituting the environment information evaluation apparatus 10. In this case, the present invention can be realized by mechanically reading out and executing the program from a recording medium (such as FD (floppy disk), CD-ROM, DVD (digital versatile disk), MT (magnetic tape), and a semiconductor memory) containing the program, or by downloading the program into the computer via a communication medium from a server or the like.

In order to facilitate understanding an outline of the system according to the present invention, explanation will be given on an embodiment appropriate for product environment evaluation on the side of a product (apparatus) supplier. Explanation below will make clear a form to which the system of the present invention is applied and functions and features of the system of the present invention.

A product (apparatus) supplier purchases parts from a parts manufacture and delivers the parts to a customer. The product supplier has information such as part codes and part names in a parts list constituting an apparatus in a database (technical information database) and registers and controls parts environment information ($CO_2$ generation amount and harmful substance content) in the database. It should be noted that hereinafter, explanation will be given, assuming that the product supplier has a quality guarantee (quality control) department, a development/design department, a production technique department, and a trade department. However, the present invention is not limited to an organization having such departments.

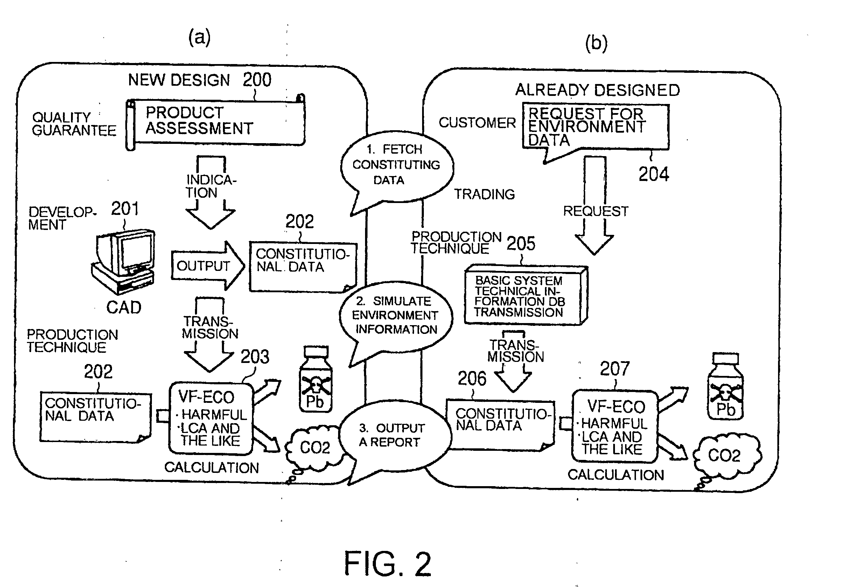

Firstly, referring to Fig. 2A, explanation will be given on designing a new apparatus in the product supplier.

For a newly designed apparatus, the quality guarantee department performs a predetermined product assessment 200 as has been described above and requests the development/design department to submit product specification at the planning stage.

The product assessment, for example, contains following indexes as a guide for the product design:

- Reduction of the product weight
- Resource recycle
- Making decomposition and removal easy
- Safety and environment preservation
- Making reclamation easy
- Making the product usable for a long period
- Reduction of power consumption
- Providing information/description of an instruction manual

Moreover, the quality guarantee department requests the production technique department to prepare an environment assessment as one of the product assessments, i.e., an environment simulation by the system (10 in Fig. 1) of the present invention.

The development/design department fetches a parts list constituting the apparatus to be developed (referred to as "constitutional data") 202 from a CAD system 201. It should be noted that the development/design department normally selects a part from the parts information database system containing parts information containing parts characteristic data and price information about the parts of the constituting data, and uses the part in the apparatus. The development/design department replies about a specification of an apparatus being planned at an initial design stage and a final apparatus specification at a later design stage.

The development/design department provides constituting data of the apparatus to the production technique department.

The production technique department performs an environment information simulation 203 by using the constitutional data 202 provided by the development/design department. It should be noted that the environment information simulation system is also called "VF-ECO" (virtual factory ECO system) by the applicant of the present invention.

According to the environment simulation execution result, if it is decided that the part causes a serious affect to the environment, the development/design department is requested to reconsider the part to be used so as to improve the design. Moreover, in the development/design department, it is possible to proceed green design by utilizing the calculated environment information (harmful substance information, $CO_2$ generation amount, and the like).

The production technique department submits to the quality guarantee department the simulation result as a report of the environment assessment result. As the simulation result, a harmful substance list, a parts name code list, and the like are output.

The system according to the present invention enables the development/design department, upon designing a new apparatus, to select parts considering not contaminating the earth environment by using the environment information of the parts constituting the apparatus, thereby supporting green design.

Next, referring to Fig. 2B, explanation will be given on a case when environment information of an already designed apparatus is requested.

The trade department receives an environment information submission request from a customer. Upon reception of the submission request, the trade department identifies an object apparatus and requests the production technique department to perform an environment information simulation of the object apparatus.

For the apparatus requested by the trade department, the production technique department spreads the apparatus constituting data 206 by the constituting data spread means 11 of Fig. 1 according to a technical information database 205. According to this constituting data, an environment risk simulation 207 is executed and the simulation result is submitted as a report to the trade department.

The report output function includes: an LCA report, a harmful substance content report, a power consumption comparison report, a recycled plastic use ratio report, a recycle ratio report, and the like.

The trade department receives the environment risk simulation result from the production technique department and reports the result to the customer.

A user can utilize all the functions of the system of the present invention via the WEB browser on a client terminal. A report containing a graph can also be output by the browser. The client need not install special software on the client terminal.

Next, explanation will be given on a structure of the database 20 in the embodiment of the present invention. Apparatuses produced by a product supplier such as electric and electronic apparatuses generally consist of electric parts (resistor, capacitor parts, relay switch, connector, semiconductor device) and mechanical parts (chassis, substrate).

The database 20 of the system of the present invention storing and controlling the environment information of these parts have following features:

[Features of the database]

(1) Information on the electric parts is classified and controlled by the type.
(2) Information of the mechanical parts is controlled by parameters such as a raw material, plating, and coating.

(3) Environment information supplied from a parts manufacture to an apparatus supplier is isolated from parts information in the apparatus supplier and controlled separately.

(4) A list of harmful substances to the environment is classified into three ranks (inhibit, evasion, control) to be managed. Furthermore, when the harmful substance control principle is different between an apparatus supplier and customers to which an apparatus is to be delivered, it is possible to output an evaluation report according to each principle, in accordance with harmful substance types to be controlled and their ranks. Thus, it is possible to cope with a plurality of control principles.

(5) Information on parts purchased by an apparatus supplier from a parts manufacture and their materials is managed by maker items of the parts manufacture without using the item code (item code assigned in the apparatus supplier) of the apparatus supplier.

(6) The database contains and manages relation information (item relation) indicating which item inherent to an apparatus supplier consists of which item of a parts manufacture. Moreover, when a single item is purchased from a plurality of parts manufacture (so-called multi-vendor purchase), a single item name code of the manufacture supplier corresponds to a plurality of maker items of the parts manufacture. It should be noted that upon multi-vendor purchase, harmful substance content is calculated by selecting a part containing a maximum harmful substance amount for each of the harmful substances and they are accumulated.

(7) In general, a single part contains a plurality of harmful substances and accordingly, information (harmful item) on harmful substances contained in the item (maker item) delivered by the parts manufacture and their contents is managed by a data model of parent-child relationship of 1 : n, i.e., one maker item corresponds to a plurality of harmful items.

(8) A harmful substance content of an electric part may differ from one another even if the parts are of an identical type and characteristic. That is, for example, capacitors and resistors having identical characteristic (of an identical capacity and an identical resistance value) contain different harmful substance contents depending on the parts manufactures. To cope with this, in this invention, environment information of electric parts is registered and controlled in the database for each of the types. On the other hand, a harmful substance content of a mechanical part (frame and the like) is determined by its weight and surface area and can be calculated when the raw material, plating, and coating are decided. Accordingly, in the present invention, for a mechanical part, a harmful substance content of the material per unit weight and a harmful substance content of plating and coating per unit area are held and managed as harmful material information.

Thus, in the system of the present invention, the database 20 contains harmful item information for each of the maker items of a parts manufacture and it is possible to search environment information of an item from its item code of the apparatus supplier via the item relation information for relating item codes of the apparatus supplier to maker items.

By the way, when implementing the environment information simulation system, what requires most time is collecting contents from parts manufactures. According to the present invention, it is possible to perform an environment simulation with a high accuracy even when environment information of parts is not collected completely. And more parts environment information is collected, the simulation accuracy is improved.

In the system of the present invention, environment information of parts is controlled according to maker items of parts manufactures which provide parts to an apparatus supplier. Accordingly, there is no need of re-input data corresponding to an item code of the apparatus supplier for constructing the database, which improves work efficiency.

Furthermore, for example, when another apparatus supplier (another department) executes the system of the present invention, it is possible to re-utilize the parts environment information (contents), thereby facilitating introduction of the system and reducing TCO (total cost of ownership).

As for environment information of a mechanism part, a raw material, a weight, a surface area, and the like of the mechanism part is registered in the database 20 for each of the maker items of the parts manufacture.

Next, explanation will be given on an environment simulation execution block in the embodiment of the present invention. An environment information simulation of an apparatus is normally executed by modifying many times the apparatus constituting data consisting of an enormous number of parts (parts list constituting an apparatus). Accordingly, a calculation processing amount of the simulation is increased, thereby increasing the turn around time (TAT).

Moreover, when a simulation is executed by re-specifying the apparatus structure each time a report is output, the work efficiency is not preferable.

To cope with this, in the embodiment of the present invention, a simulation work is separated from a report output work, so that a simulation result can be used as information for report output.

In the system of the present invention, when executing a simulation of environment information, the database 20 is searched by the search means 11. When the search results in that environment information of an electrical part constituting an apparatus is not collected and not registered in the database 20, environment information of a part of the same type as that electrical part registered in the database 20 is extracted and a weighted mean of environment information of a part unit is calculated at real time and accumulated. The calculated environment information of the electric part is registered in the database 20 and the value will be used next time and after. Of course, if environment information of the part is submitted from the parts manufacture, the submitted environment information is registered in the database.

Moreover, environment information of a mechanism part is accumulated from information on the raw material, weight, surface area, plating, and coating of the mechanism part.

This enables an accurate simulation even when collection of environment information is insufficient.

The system of the present invention is also characterized in that a multi-user interface is provided as the search means 11 of the database 20 in accordance with the number of the simulation data cases. That is, three types of specification of constituting data are available when designing a new apparatus.

(1) When searching a small amount of data promptly, the system is accessed from a terminal browser and an item code is entered.

(2) Upon a normal search, a file containing information on several to several hundreds of item codes to be searched is transferred from a terminal browser to a search server, so as to execute search, and the search result is displayed on the terminal.

(3) In case of a batch search of a large amount of data exceeding a thousand cases, a search request is copied to the server, and the search server stores the search result in a file server.

Moreover, the system according to the present invention comprises constituting data automatic spread means (14 in Fig. 1) in accordance with an apparatus. That is, the constituting data spread means 14 spreads apparatus constituting data (apparatus constituting parts list), for example, in a plurality (multi) of hierarchies and spreads the data up to parts of the lowest level, and the environment information evaluation means 12 accumulates environment information of each part. A user only indicates an item code of a parent and constituting data of items of child constituting the item code is automatically spread. Furthermore, when grandchild items are present constituting the child items, constituting data related to the grandchild items is automatically spread. Accordingly, only by entering an item code, a development/design staff or the like can obtain environment information as accumulated environment information on parts of a child, a grandchild, and a great-grandchild.

By introducing the system of the present invention having the aforementioned structure, sufficient environment preservation measure can be expected in the apparatus industry.

By introducing the system of the present invention, it is possible to accurately grasp environment information on a harmful substance content, a $CO_2$ generation amount, and the like.

Makers are strongly expected by customer enterprises to cope with environment preservation. In near future, manufactures will have to answer to a supply guideline of a customer enterprise for environment preservation. In view of this tendency, by introducing the system of the present invention considering environment preservation, it can be expected to improve business results by receiving more orders. Furthermore, people are more and more interested in the environment problem and enterprises considering the environment preservation will be able to give a favorite impression. Thus, consideration on the environment leads to image-up of an enterprise, which in turn helps to win a non-cost competition such as getting excellent persons as staffs.

According to the present invention, the entire system including the report function has a network type system structure connected to the Internet and Intranet and there is no need of installing dedicated software on a terminal or setting specific configuration (environment setting), thereby reducing the TCO.

Moreover, according to the present invention, since the parts manufacture information is controlled independently, it is possible to compare harmful substance contents on parts manufacture basis and an apparatus supplier can purchase parts preferentially from a parts manufacture having an advanced environment preservation plan. Moreover, the apparatus supplier can educate a parts maker which is behind in consideration of the environment preservation.

In the system of the present invention, environment information is summarized on item basis and is linked to the parts information system. Thus, for example, in an apparatus development stage of Fig. 2A, a development/design staff can select parts not containing or containing little harmful substance, i.e., "tender to the environment", thereby performing "green design".

By the way, currently, there is no public standard for regulating harmful substance contents in apparatuses. Accordingly, makers and enterprises which purchases apparatuses prepare in-company standards. In such a condition, makers spreading global business should consider the environment preservation and output a report for each of the customers, countries, and self-governing communities. According to the system of the present invention, it is possible to obtain a plurality of principles for controlling harmful substances and execute simulation by modifying the control principle in accordance with the control principle to which a report is to be submitted.

Furthermore, according to the present invention, information on parts purchased by an apparatus supplier from a parts manufacture and their materials is managed by maker items of the parts manufacture without using the item code (item code assigned in the apparatus supplier) of the apparatus supplier. Accordingly, it is possible to perform a multi-vendor purchase.

Referring to the attached drawings, the aforementioned embodiment of the present invention will be described in detail.

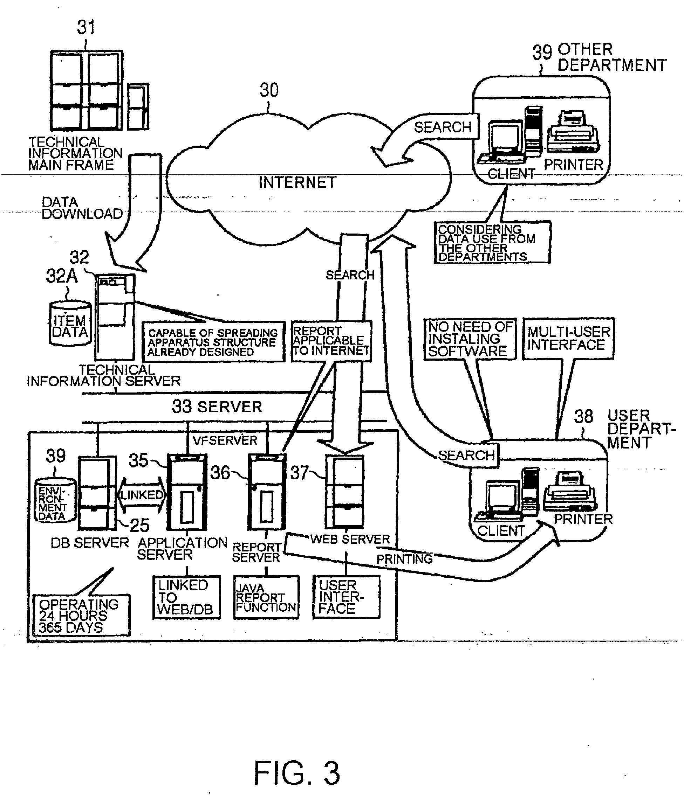

Fig. 3 shows a system structure according to the embodiment of the present invention. Fig. 3 shows a specific example of the embodiment explained with reference to Fig. 1. In Fig. 3, a technical information main frame 31 has a master file of parts information and data is downloaded from this master file to a technical information server 32.

In the technical information server 32, a technical information database 32A containing item data corresponds to the technical information database 205 in Fig. 2B. From the apparatus information stored in the technical information database 32A, it is possible to spread the apparatus structure designed.

The simulation system according to the embodiment of the present invention is constituted by servers. A server 33 depicted includes: a database (DB) server 25 having an environment database 20 (corresponding to the database 20 in Fig. 1); an application server 35 executing a simulation in combination with the database server 25; a report server 36 for creating a report output of the simulation result; and a WEB server 37 providing a user interface for a client terminal 38 and the like.

For example, an HTML (hypertext mark-up sentence) sentence is entered into a WEB browser of the client terminal 38 from the WEB server 37 and respective functions of the environment simulation system are selected and executed on the display of the terminal 38. That is, functions of the environment simulation system can be accessed from the browser of the client terminal 38 via the Internet 30 and there is no need of installing dedicated software. Only by clicking "printing" on the browser screen of the client terminal 38, output data (including image data) from the report server 36 is printed out from a printer of the client terminal 38.

Moreover, by setting the item relation information specifying the relationship between the maker items and the items of an apparatus supplier in the environment database 20 to another apparatus supplier, it is also possible for the other supplier (department) 39 to utilize the system.

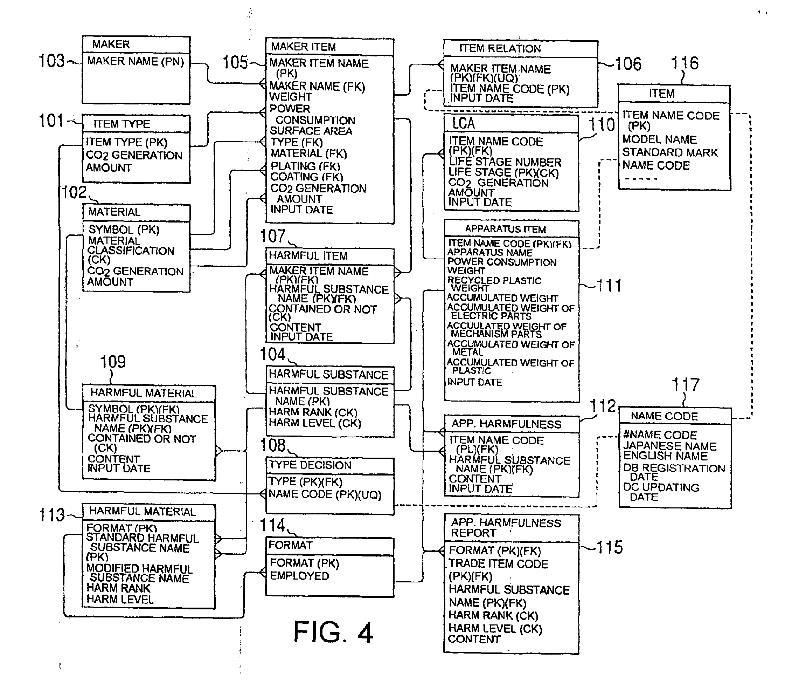

Fig. 4 shows a data model of data stored in the environment database 20 according to the embodiment of the present invention.

In the environment database 20, information on electric parts is classified into types and controlled by the types. An item type table 101 of electric parts is a table containing information on a $CO_2$ generation amount using the item type as a primary key (PK).

As for the mechanism parts, information on the mechanism material is classified, for example, into three parameters: a raw material, plating, and coating, and controlled by the respective parameters. A material table 102 contains information on a symbol (primary key) of a material, a material, type (primary key), and a $CO_2$ generation amount.

A maker table 103 contains makers' names. The maker table 103 has a maker item table 105 as a child, assuming a data model of parent-child relation (1 : n). The maker item table 105 contains an item name, a manufacture name, weight, power consumption, surface area, type, material, plating, coating, $CO_2$ generation amount, and the like.

The maker item table 105 has an item relation table 106 as a data model of parent-child relationship. The item relation table 106 has a maker item name and an item name code as keys.

The item relation table 106 performs correspondence between the item name codes of parts in the apparatus supplier (enterprise) and maker item name of the parts in the parts maker providing the parts. This enables a user to search a maker item name (maker item) from the item name code. It is possible to search and output a list of correspondence between the parts of the apparatus supplier (enterprise) (referenced by the item name code of the apparatus supplier) and items of parts makers.

The item relation table 106 has item names of the apparatus supplier as a child. The item name table 116 contains an item name code, a model name, a standard mark, and a name code.

The item type table 101 has a type decision table 108 as a child of a data model of the parent-child relationship; and has a type as a primary key and a foreign key (FK), and a name code as a primary key and a unique key (UK). It should be noted that the primary key is used as a search key; the foreign key is used to verify presence of a parent in the parent-child data model; and the unique key has a unique value. Moreover, CK is a check key which has no direct relationship with the present invention and its explanation is omitted.

The name code table 117 has a Japanese name, an English name, and a date of registration on the database. The item name table 116 and the name code table 117 are information stored in the parts information database controlled by the technical information server.

The material table 102 has a plurality of harmful material tables 109 as children of the parent-child data model (1 : n). Each of the harmful material table 109 has a symbol, a harmful substance name, presence/absence of harmful substance, harmful substance content. For example, for a chassis as a mechanism member of an apparatus, iron, plastic resin, and the like are linked to a harmful substance such as lead and cadmium.

Moreover, a harmful substance table 104 contains a harmful substance name, harm rank, and harm level (quantity data), and has a harmful material table 109 and a harmful item table 107 as children.

The harmful item table 107 contains a maker item name, a harmful substance name, presence/absence of harmful substance, harmful substance content.

An apparatus item table 111 contains an item name code, an apparatus name, power consumption, weight, weight of recycled plastic, accumulated weight, accumulated weight of electric parts, accumulated weight of mechanical parts, accumulated weight of metal, and accumulated weight of plastic.

The apparatus item table 111 has an LCA 110 which is searched by the item name code as a child. The LCA 110 contains information on an item name code, a life stage, and a $CO_2$ generation amount.

The apparatus item table 111 has an apparatus harmfulness table 112 as a child. The apparatus harmfulness table 112 contains an item name code, a harmful substance name, and a harmful substance content.

A harm format table 113 contains a format, a reference harmful substance name, a modified harmful substance name, and a harm level, and has the harmful substance table 104 and a format table 114 as children.

The apparatus item table 111 and the format table 114 have an apparatus harmfulness report table 115 as a child. The apparatus harmfulness report table 115 contains a format, an item name code, a harmful substance name, a harm rank, a harm level, and a content.

Description will now be directed to structure of the database 20 realizing a function to classify and control information on electric parts by type according to the embodiment of the present invention.

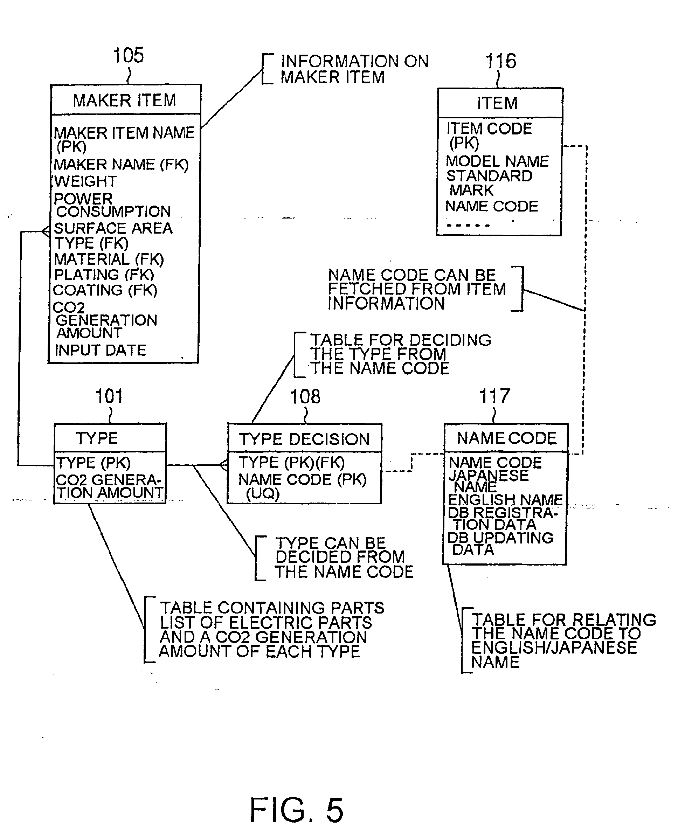

Fig. 5 shows a specific structure for realizing the aforementioned feature (1) of the database. Information on the electric parts is classified and controlled by an item type.

The item type table 101 is a table containing a list of types of electric parts and a $CO_2$ generation amount for each of the types. The item type table 101 is linked to the maker item table 105 containing information on maker items and to the type decision table 108. The type decision table 108 is used to decide a type from a name code. A name code is fetched from the item information. A name code table 117 is a table for correspondence between an English name and a Japanese name.

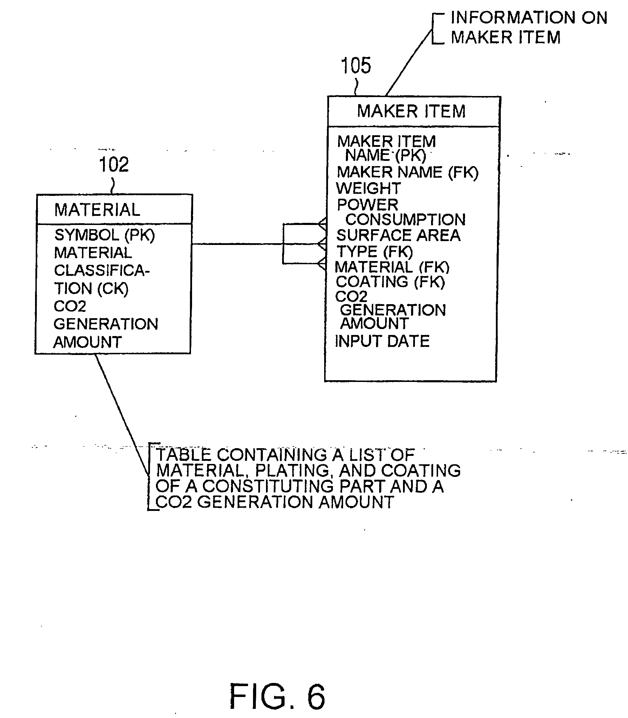

Fig. 6 shows a specific structure for realizing the aforementioned feature (2) of the database. Material information of mechanism parts is controlled by parameters such as raw material, plating, and coating.

The mechanism material information is classified and controlled, for example, by three parameters: raw material, plating, and coating. The material information table 102 contains information on a raw material, plating, coating of a mechanism part and a $CO_2$ generation amount, and points to the maker item information table 105.

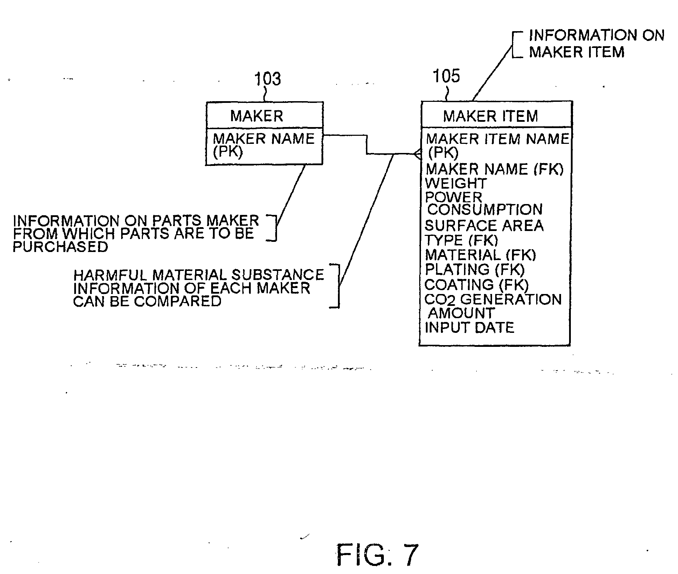

Fig. 7 shows a specific structure for realizing the aforementioned feature (3) of the database. The maker table 103 which contains information on parts makers is controlled separately from the maker item table containing information on maker items. The maker table 103 and the maker item table 105 make a parent-child data model of 1 : n, Using a maker name as a key, it is possible to compare harmful substance content information of respective makers.

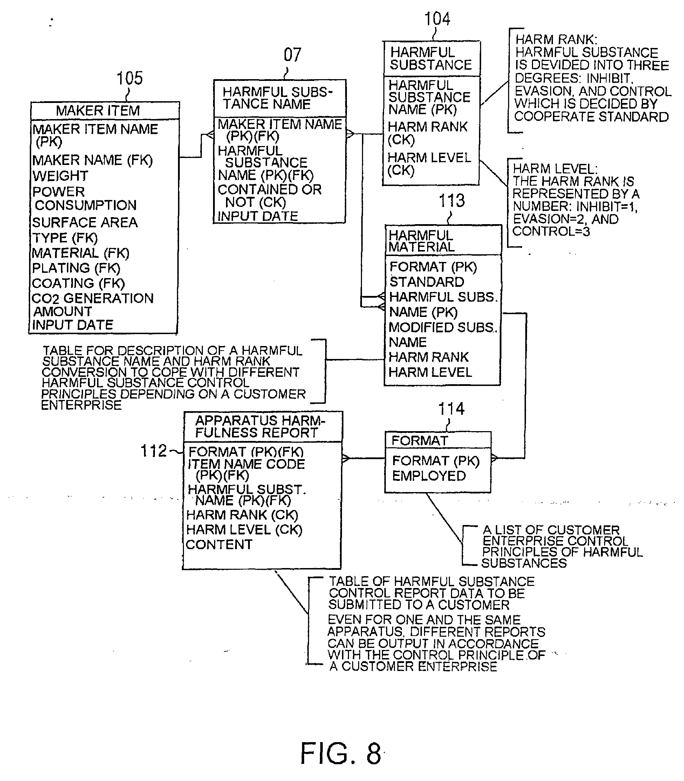

Fig. 8 shows a specific structure for realizing the aforementioned feature (4) of the database.

A list of harmful substances for the environment are classified into three ranks (inhibit, evasion, control) to be controlled. It is possible to cope with harmful substance types to be controlled and their ranks in accordance with a plurality of control principles of the apparatus suppliers and the customer to which an apparatus is to be delivered. The maker item table 105 having information on a parts maker has a plurality of harmful item tables 107 as a child data model for each of the maker items, and the harmful substance table 104 also has the harmful item table 107 as a child data model. In the harmful substance table 104, a harmful substance is classified into three ranks of inhibit, evasion, and control. The harm level represents a quantity of the harm rank, and standard data of the apparatus supplier is set. The harm level is set as inhibit = 1, evasion = 2, and control = 3.

The "inhibit" means to inhibit to use the substance and a part containing this harmful substance cannot be used. The "evasion" means to use little of the substance. The "control" means that the harmful substance should be controlled in the content and the like. The rank is lowered in the order of inhibit, evasion, and control.

The harmful substance table 104 has the harm format table 113 as a child data model. The harm format table 113 is a table for describing a harmful substance name and converting the harm rank (conversion from an apparatus supplier to a customer dedicated rank) to cope with harmful substance control method different for each of the customers.

The harm format table 113 has the format table 114 as a child data model. The format table 114 consists of a harmful substance control method list of customer enterprises.

The format table 114 has the apparatus harmfulness report table 11 as a child data model. The apparatus harmfulness report table 111 is a table of harmful substance control report data to be submitted to a customer and can be output in a format based on the control method of each customer enterprise to which the report is to be submitted.

From the maker item table 105, the harmful item table 107 is found and for each of the harmful items, description of harmful substance and conversion for the rank are performed for a customer in accordance with the information of the harm format table 113. Thus, information of the apparatus harmfulness report table 112 is created for each of the customers.

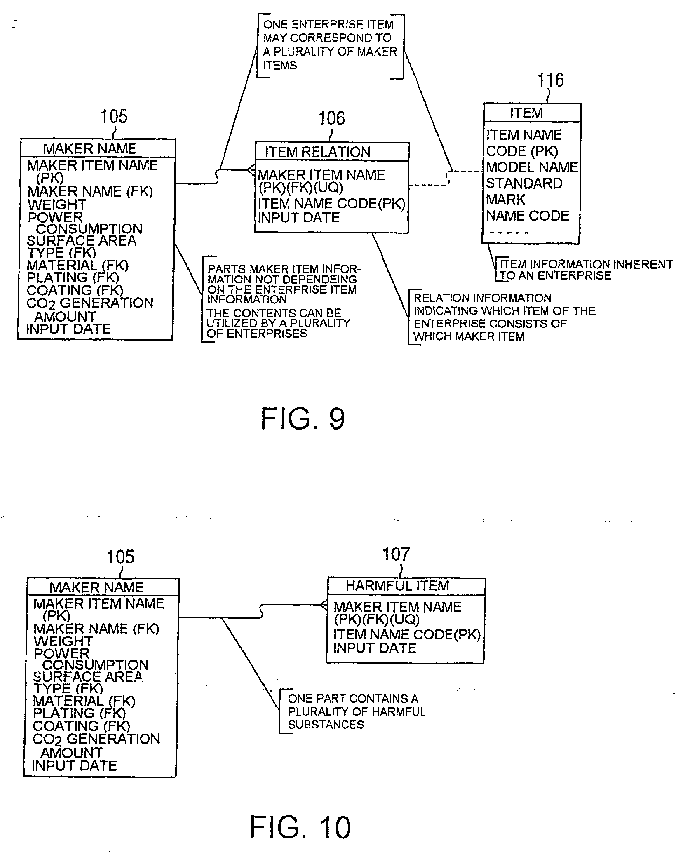

Fig. 9 shows a specific structure for realizing the features (5) and (6) of the database. Information on parts purchased by an apparatus supplier and their materials is controlled by the maker items table 105 of the parts manufacture without using the item code inherent to the apparatus supplier. The item relation table 106 indicating which apparatus supplier item consists of which maker item is used.

The maker item table 105 serving as maker item information of a parts maker has a plurality of the item relation tables 106 as children. A single item of an apparatus supplier may correspond to a plurality of parts maker items. That is, when one item is purchased from a plurality of parts makers (multi-vendor purchase), this item relation table 106 shows correspondence between the apparatus supplier item and a plurality of maker item tables 105.

When producing an apparatus, it is not decided parts of which parts maker are used. Accordingly, calculation of a harmful substance amount upon multi-vendor purchase is performed, assuming that a part containing maximum content is selected for each of the harmful substances.

Parts information is controlled by the maker item table 105 and does not depend on the apparatus supplier item information and accordingly, a plurality of apparatus suppliers can use the contents.

Fig. 10 shows a specific structure for realizing the aforementioned features (7) of the database. In order to cope with the situation that one part contains a plurality of harmful substances, the maker item table 105 of parts delivered by a parts maker is related to a plurality of harmful item tables 107 as a data model of (parent-child relationship of 1 : n).

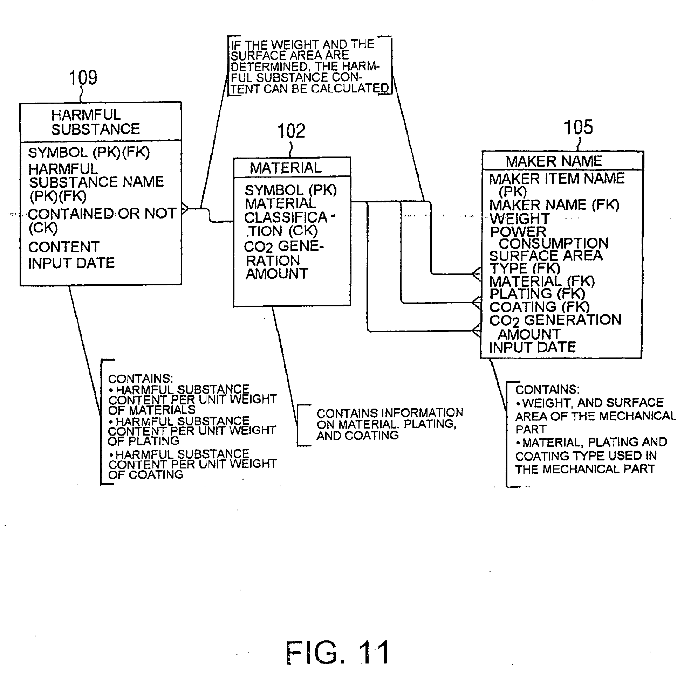

Fig. 11 shows a specific structure for realizing the aforementioned features (8) of the database.

The material table 102 has the maker item table 105 and the harmful material table 109 as data model children. As shown in the figure, the material table 102 has information on a raw material, coating, and plating.

The maker item table 105 has information on a weight and a surface area of a mechanism part and information on a material, plating, and coating type used in the mechanism part.

The harmful material table 109 contains information on: a harmful substance content per material unit weight; a harmful substance content per unit surface area of plating; and a harmful substance content per unit surface area of coating.

A total of harmful substance contents of a mechanism part (such as a frame) is calculated from the material of the mechanism part, its weight, surface area, plating, and coating type.

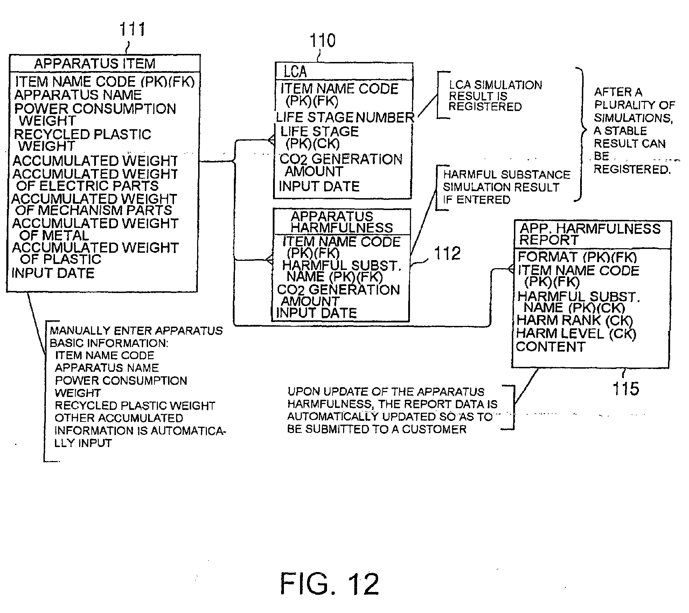

Fig. 12 explains registration processing of a simulation result according to the embodiment of the present invention. An environment information simulation of an apparatus is performed by modifying many times the apparatus constituting data consisting of an enormous number of parts (parts list constituting the apparatus). It is inconvenient to specify apparatus constituting data upon each report output. To cope with this, in the embodiment of the present invention, the simulation work is separated from the report output work, so that a simulation result can be registered as information for report output.

The apparatus item table 111 contains basic information on an apparatus, in which accumulated information other than the apparatus name code, apparatus name, power consumption, weight, and weight of recycled plastic is automatically set.

The apparatus item table 111 has the LCA table as a child data model. Explanation will be given on the life stage of the LCA. In the LCA, for an apparatus name (item name code), a $CO_2$ generation amount is calculated in each of following six life stages: material production, parts production, assembly, trading, use, and disposal.

In the LCA table 110, a $CO_2$ generation amount obtained as a simulation result in each the life stages: material production, parts production, assembly, trading, use, and disposal are registered. Normally, a simulation is repeated a plurality of times and a stable value is registered.

The apparatus item table 111 has the apparatus harmfulness table 112 as a child data model. The apparatus harmfulness table 112 contains a simulation result of a harmful substance. Normally, a simulation is repeated a plurality of times and a stable value is registered. When the apparatus harmfulness table 112 is modified, the apparatus harmfulness report table 115 is automatically modified. The apparatus harmfulness report table 115 is used as report data to be submitted to a customer.

Moreover, harmful substances and their ranking can be specified in accordance with different harmful substance control methods (which material is decided to be harmful, how its harmfulness is to be ranked) of a supplier (enterprise) or a customer enterprise using the system of the present invention. That is, the harmful substance table 104 has the harm format table 113 as a child (parent-child relationship of 1 : n), and for one harmful substance, different harm ranking and harm level information can be provided. Simultaneously with this, a name of a harmful substance can be modified/adjusted (for example, mercury is modified to mercury compound), and by using the format table 114 and the apparatus harmfulness report table 115, it is possible to specify a harmful substance to be controlled and its ranking for each of the apparatuses supplied to a customer.

An electric part contains a harmful substance whose content is different from one item to another even if the items are of identical type and identical characteristic. That is, for example, capacitors and resistors of identical characteristic (identical capacitance and identical resistance) have different harmful substance contents depending on the parts markers. As for a mechanism part (such as a frame), a harmful substance content is determined by its weight and surface area and can be calculated if material, plating, and coating are decided.

In the present invention, for mechanism parts, the maker item table 105 contains and controls a harmful substance content per unit weight of the material and a harmful substance content per unit area of plating and coating.

In the present invention, when the environment database 20 does not contain environment information (a harmful substance content, a $CO_2$ generation amount, and the like) of an electric part item, the harmful substance amount of the electric part is calculated by weighted mean of a harmful substance content and a part weight of a part of an identical type (maker item) which is registered in the environment database 20.

As has been described above, for the environment data of electric parts contained in an apparatus, it is necessary to collect for each of the items from the parts maker. However, it is difficult to collect these data completely because of the following reasons.

1. The number of parts is enormous.
2. Time and cost are required when a contained substance is analyzed by the apparatus supplier or the parts maker.
3. The analysis may be related to an enterprise secret.

Accordingly, it is substantially impossible to register accurate information on harmful substance contents of maker items for all the electric parts in the database.

To cope with this, in the embodiment of the present invention, when no environment data is collected from a parts maker, weighted mean is obtained at real time upon environment simulation of an apparatus for each of the item types and the weighted mean is utilized in the calculation of simulation.

When n parts of an identical type are registered in the environment database 20 and the i-th parts has weight $w_i$ and a harmful substance content $z_i$, a harmful substance content Z of an electric part whose weight data is W is obtained by averaging (weighted mean) as follows:

$$Z = W\{(\Sigma_{i=1}^{n} z_i/w_i) / n\}$$

Similarly, when the i-th part has weight $w_i$ and a harmful substance content $x_i$, a harmful substance content Z of an electric part whose weight data is W is obtained by averaging (weighted mean) as follows:

$$Z = W\{(\Sigma ni = 1xi/wi) / (\Sigma ni =1wi)\}$$

Thus, even when the environment information is not sufficient, it is possible to perform simulation with a high accuracy.

That is, in the embodiment of the present invention, even when environment data of an electric part is not registered in the database 20, the environment data is calculated from a representative part. Accordingly, the system can be used even when the database 20 does not contain environment data of all of the parts to be collected from a parts maker. This facilitate introduction of the system.

As shown in Fig. 3, in the embodiment of the present invention, all the system functions can be utilized by the WEB browser alone on the client terminal 38.

Furthermore, an environment report output including a graph can be printed out as is displayed on the screen, not depending on the printing function of the WEB browser for the Internet.

Moreover, when introducing the system of the present invention to another enterprise, there is a case that harmful substance content information need not collected from a parts maker. Only by preparing relation information indicating which item of the apparatus supplier (enterprise) corresponds to which item of which parts maker (item relation table 106), it is possible to easily introduce the system to an arbitrary apparatus supplier in a short time.

The system of the present embodiment of the present invention provides three types of constituting data specification methods as multi-user interface in accordance with the number of cases of simulation data when designing a new apparatus:

(1) When searching a small amount of data promptly, an item name code is entered from the WEB browser of the client terminal.

(2) Upon a normal search, a file containing search item code information is transferred from the terminal browser to the search server to execute search and the search result is displayed on the terminal.

(3) In case of a batch search of a large amount of data, a search request is copied to the server, and the search server stores the search result in a file server.

Thus, by preparing a plurality of user interfaces, flexible search processing can be obtained including an enormous data processing (batch processing) and respective searches.

The embodiment of the present invention provides a function of automatic spread of apparatus constituting data by linking to the basic system technical information database 32A containing and controlling apparatus parts items and name information.

In case of an already designed apparatus, there is no need of creating constituting data. By linking to the basic system technical information database (parts information database) 32A , only by specifying parent item information, it is possible to automatically collect item information of the entire hierarchy including child items, grandchild items, and the like. The environment information simulation output includes a harmful substance list (including graph information), an item name code list, an LCA report, and the like.

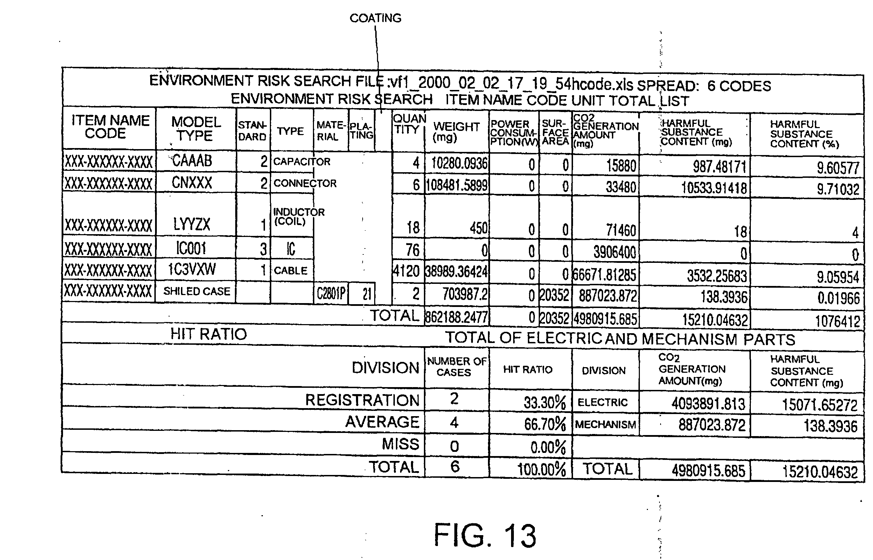

Fig. 13 shows a report output of the environment simulation system according to the embodiment of the present invention and shows an example of an item name code list. The example of Fig. 13 has columns of an item name code, model name, standard, type, material, plating, coating, quantity, weight, power consumption, surface area, $CO_2$ generation amount, harmful substance content (mg), and harmful substance content (%) for six parts (capacitor, connector, coil, IC, cable, and shield case). The standard givens environment guideline information and may be a value 1, 2, 3, and the like in accordance with advice degree.

With regard to the hit ratio, two cases are registered and the hit ratio (environment information of the part is registered in the database) is 33.3%, four cases are registered and the hit ratio is 66.78% on the average (obtained by the weighted mean processing), and miss is 0%.

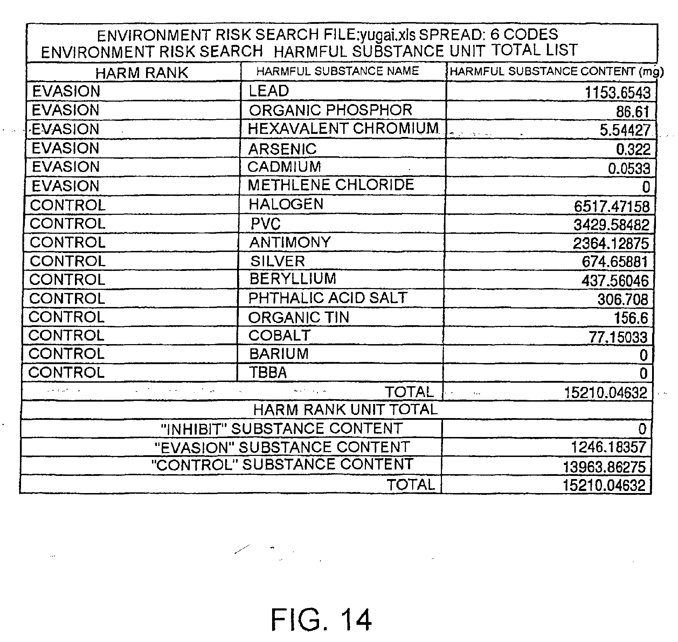

Fig. 14 shows a report output of the environment simulation system of the embodiment of the present invention, and shows an example of a harmful substance list. With regard to the harm rank, one of the ranks of inhibit, evasion, control is added for each of harmful substance names. This harm rank can be modified in accordance with the customer control principle, It is also possible to accumulate the harmful substance content for each of the harm ranks.

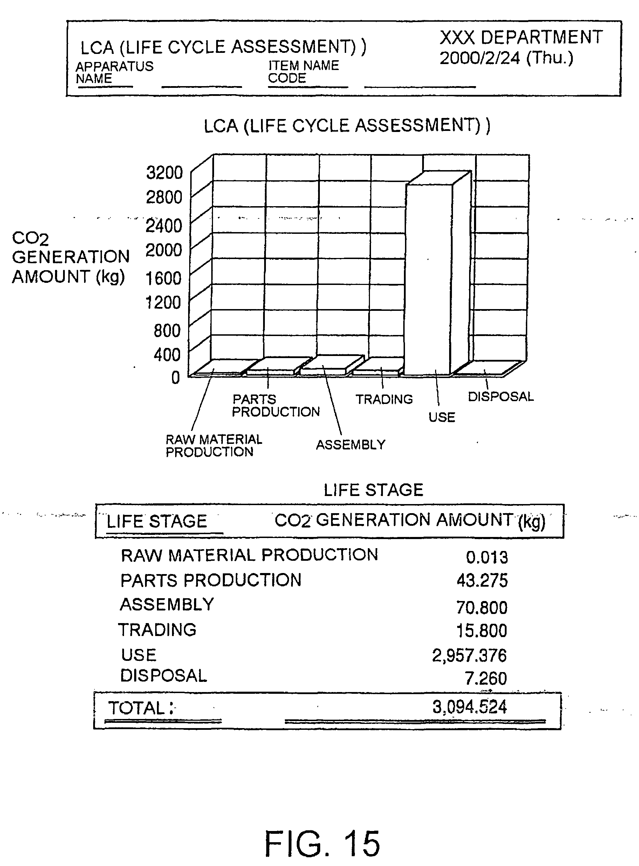

Fig. 15 shows a report output of the environment simulation system according to the embodiment of the present invention, and shows an example of the LCA report. For an apparatus name and an item name code, a $CO_2$ generation amount at each of the stages of raw material production, parts production, assembly, trading, use, and disposal and a total of them are output.

Brief explanation will be given on a calculation method of a $CO_2$ generation amount (LCA evaluation method) at each of the stages of raw material production, parts production, assembly, trading, use, and disposal.

1. Raw material production

$CO_2$ generation amount of a mechanism part = ($CO_2$ generation amount per unit weight of the material) x (part weight)

The $CO_2$ generation amount at the raw material production is calculated by accumulating the $CO_2$ generation amount of mechanism parts per apparatus unit.

## 2. Parts production

$CO_2$ generation amount of an electric part = ($CO_2$ generation amount per one type of electric part) The $CO_2$ generation amount at the parts production is calculated by accumulating the $CO_2$ generation amount of mechanism parts per apparatus unit.

## 3. Assembly

$CO_2$ generation amount at assembly = (power consumption required for producing one apparatus) x ($CO_2$ generation amount per energy use amount) Power consumption required for one apparatus = (factory power consumption) / (average apparatus production capacity)

## 4. Trading

$CO_2$ generation amount at trading = (apparatus weight) x ($CO_2$ generation amount caused by transportation per weight) The $CO_2$ generation amount caused by transportation per weight is calculated as follows: $CO_2$ generation amount caused by transportation per weight = (transportation distance) / (fuel used by 4t truck) x ($CO_2$ generation amount per 1 litter of light oil) / 4000

## 5. Use

$CO_2$ generation amount at use = (power consumption when the apparatus is used) x ($CO_2$ generation amount per energy utilization) x (life time)

Accordingly, when the product has a long life, the $CO_2$ generation at the use stage occupies the most of the $CO_2$ generation amount.
It should be noted that the power consumption at use is measured by the development/design department or the like upon completion of the apparatus assessment.

## 6. Disposal

$CO_2$ generation amount at disposal = ($CO_2$ generation amount per weight caused by transportation to the disposal place) + ($CO_2$ generation amount by disposal per weight) $CO_2$ generation amount by disposal per weight = (power consumption by a shredder) x ($CO_2$ generation amount per energy utilization) x (shredding time)

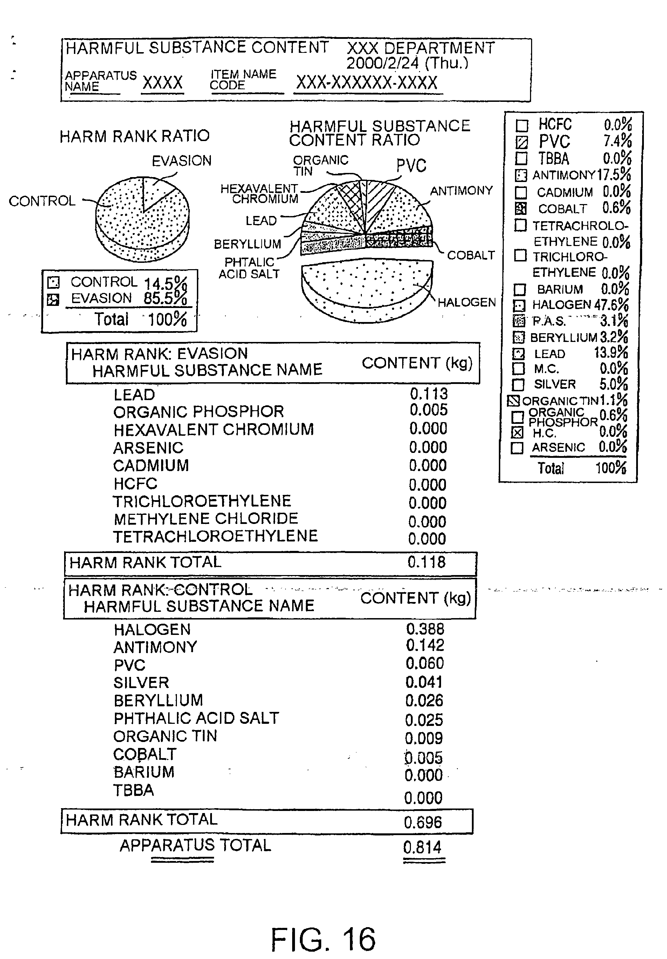

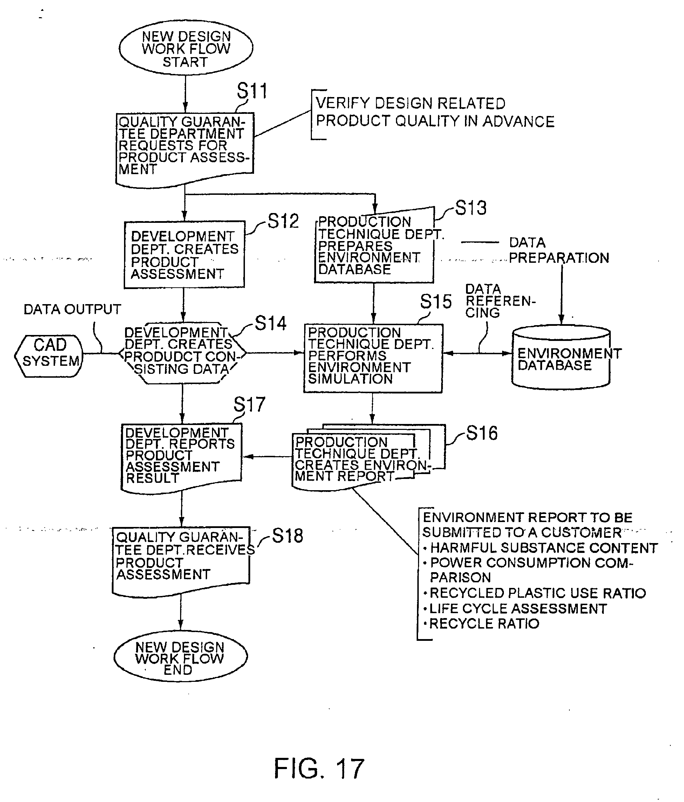

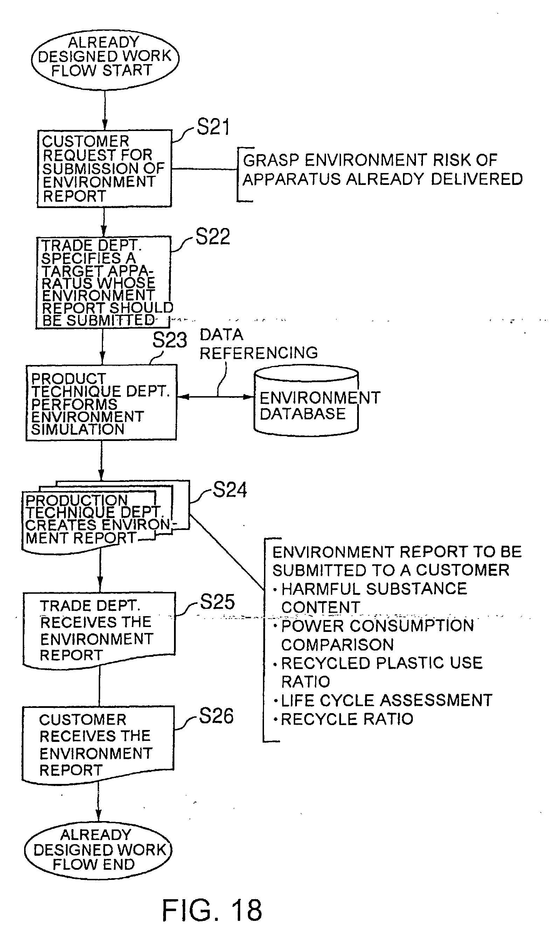

Fig. 16 shows a report output result of the environment simulation system according to the embodiment of the present invention, and shows a harmful substance report sample. The report output is created and output by a JAVA report function of the report server 37 in Fig. 3. In the example of Fig. 16, for an apparatus name and an item name code, a harm rank ratio and a harmful substance content ratio are displayed by circular graphs, and with regard to the harm rank, harmful substance names and their contents and harm rank total, and total of the apparatus are output. As has been described above, in the embodiment of the present invention, the report output including graph (image) information is printed out as the image displayed on the screen, by selecting printing out in the browser of the terminal 38 (Fig. 3).
Hereinafter, referring to flow diagrams of Fig. 17 to Fig. 24, the system of the present invention will be detailed when the system is applied to an environment evaluation of a communication apparatus. Fig. 17 and Fig. 18 shows a detail of the procedure shown in Fig. 2.
Fig. 17 explains a processing (work) flow when designing a new product (apparatus).
The quality guarantee department performs the aforementioned product assessment for a newly designed apparatus (step S11).
Preparation of a product assessment is requested to the development/design department, which creates a product assessment (step S12).
The production technique department performs environment assessment as a product assessment, i.e., prepares for a simulation by the system of the present invention (step S13).
The development/design department creates product constituting data from a CAD system (step S14).
The production technique department performs an environment simulation by referencing the product constituting data from the development/design department and the environment database (step S15).
The production technique department creates an environment report (step S16). The report to be submitted includes a database consisting of information on presence/absence of harmful substance, power consumption comparison, recycled plastic use ratio, life cycle assessment, and recycle ratio.

The development/design department submits the product assessment result report to the quality guarantee department (step S17).

The quality guarantee department receives the product assessment (step S18).

Fig. 18 explains a processing flow when environment information on a designed product is submitted to a customer.

The trade department receives an environment information submission request (step S21).

The trade department indicates an object apparatus to the production technique department and requests its environment risk simulation (step S22). This is performed to grasp the environment risk of the apparatus already delivered.

The production technique department spreads and creates constituting information of the apparatus requested from the trade department and performs an environment simulation by referencing the environment database (step S23) and outputs a simulation result report (step S24). The production technique department submits the report to the trade department and the trade department receives the environment report (step S25) and submits the report to a customer (step S26).

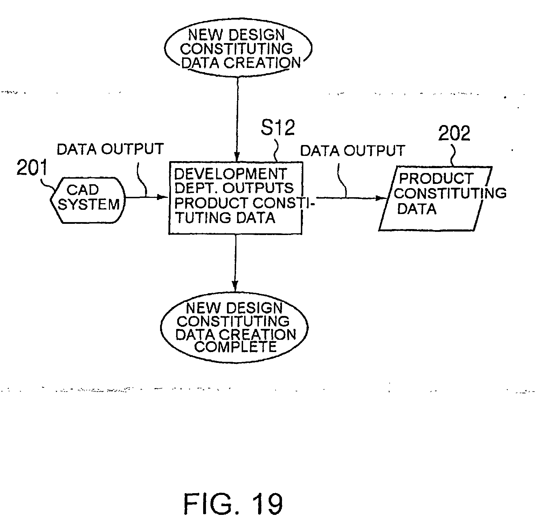

Fig. 19 shows the processing (step S14) of constituting data output for the newly designed product apparatus in Fig. 17. A parts list (constituting data) constituting the apparatus is output from the CAD system 201 for the apparatus being designed.

The constitutional data 202 consists of a plurality of units (for example, substrates) and each of the units (substrates) consists of a plurality of circuit blocks. Each of the circuit blocks consists of a semiconductor device and other parts. Thus the constitutional data 202 is represented as hierarchical parts-tree information.

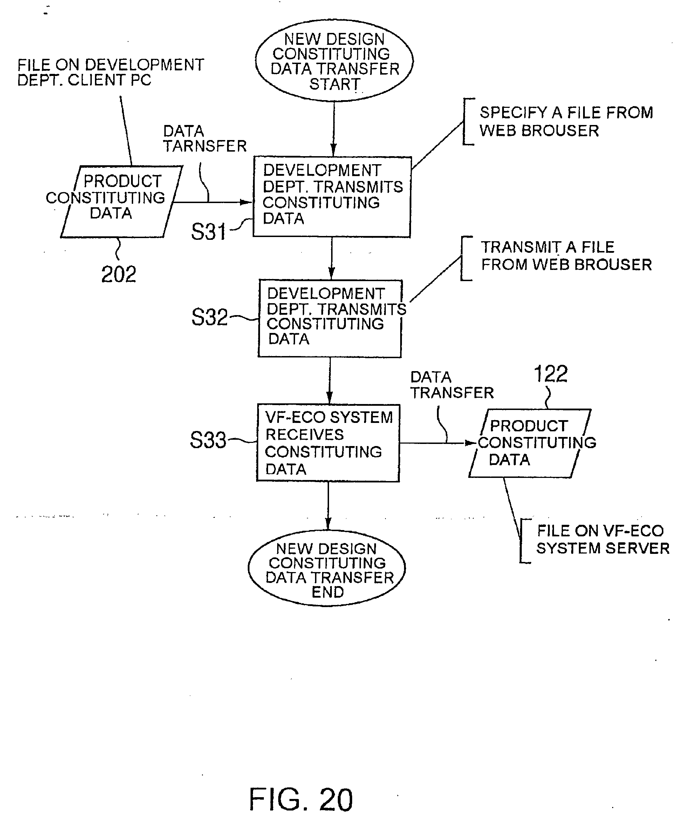

Fig. 20 shows a processing procedure of the environment simulation execution (step S15) in Fig. 17, and shows transfer control of constituting data before the simulation. In the following processing steps, the processing and control which can be executed on the computer are performed by the computer. By specifying a file from the WEB browser, a file (apparatus constituting data file) 202 on the client terminal of the development/design department can be specified (step S31). By specifying a file transmission from the WEB browser, data of the development/design department can be transmitted (step S32). The environment simulation system of the production technique department receives the apparatus constituting data and stores the data in the apparatus constituting data file 122 on the server (step S33).

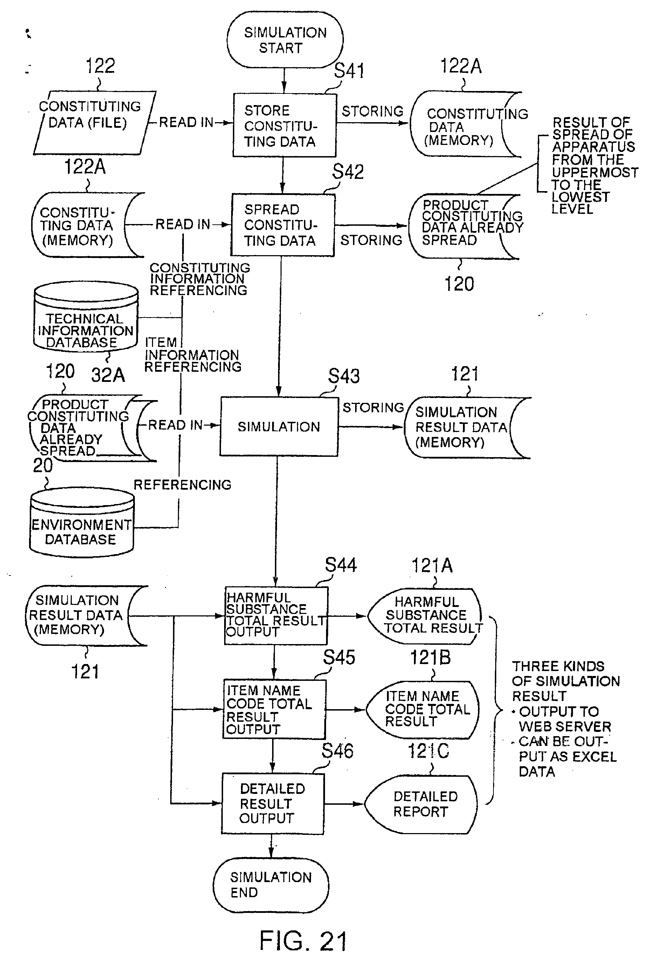

Fig. 21 shows a flow of processing procedure when performing an environment simulation (step S15 in Fig. 17 and step S23 in Fig. 18). In the following processing steps, the processing and control which can be executed on the computer are performed by the server computer.

The apparatus constituting data file 122 is read in and the apparatus constituting data 122A is stored in a memory (step S41).

The apparatus constituting data 122A is read in and spread, and the apparatus constituting data which has been spread is stored. A parts tree of the hierarchical structure of the apparatus is spread up to the end leaf of the tree structure (step S42).

The simulation is performed by referencing the technical information database containing items and names, parts of the apparatus constituting data which has been spread, and the environment database 20 (step S43).

With regard to the simulation result data 121, in case of a harmful substance total result output, a harmful substance total result 121A is output (step S44).

In case of item code total output, an item code total result 121B is output (step S45).

In case of a detailed result output, a detailed result 121C is output (step S46).

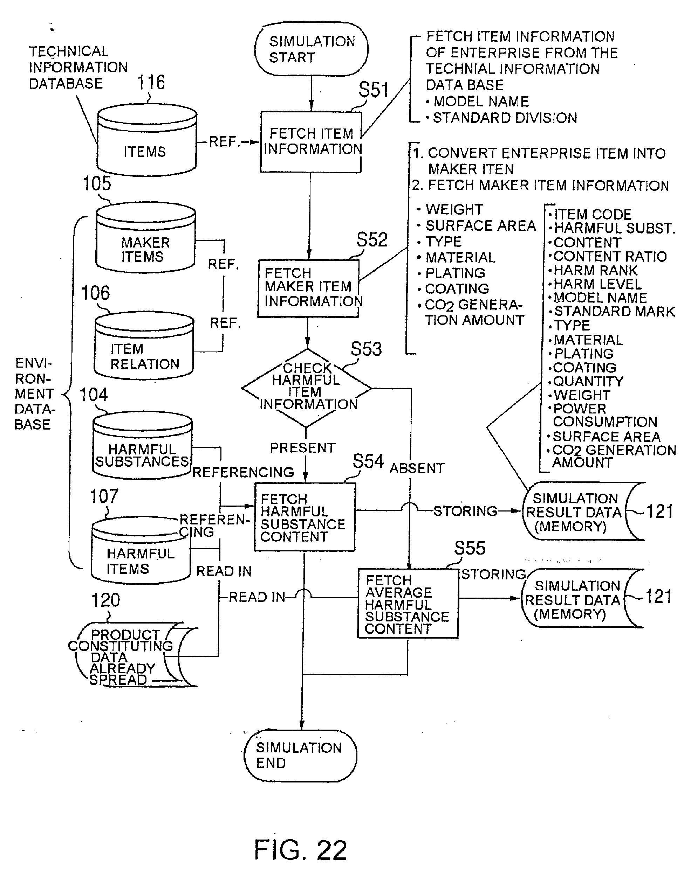

Fig. 22 shows a flow of a processing procedure of a simulation according to the embodiment of the present invention. In the following processing steps, the processing and control which can be executed on the computer are performed by the server computer.

From the item table 116 (see Fig. 4) in the technical information database (database on the technical information server 32 in Fig. 3), item information (type name, division) of the apparatus supplier is fetched (step S51).

The environment database 20 is searched and the maker item 105 and item relation 106 are referenced, thereby converting an item of the apparatus supplier into a maker item and fetching the maker item information (step S52).

The maker item information contains weight, surface area, type, material, plating, coating, and $CO_2$ generation amount.

Check is made to decide whether harmful item information is present (step S53).

When harmful item information is present, the harmful substance table 104 and the harmful item table 107 are referenced, and a harmful substance content is fetched (step S54). The simulation result data 121 (item code, harmful substance name, content, content ratio, harm rank, harm level, model name, standard mark, type, material, plating, coating, quantity, weight, power consumption, surface area, $CO_2$ generation amount) is stored in the memory.

When no harmful item information is present, the harmful substance table 104 and the spread apparatus constituting data table 120 are read in, and an average harmful substance content is calculated (step S55). The simulation result data 121 is stored in the memory.

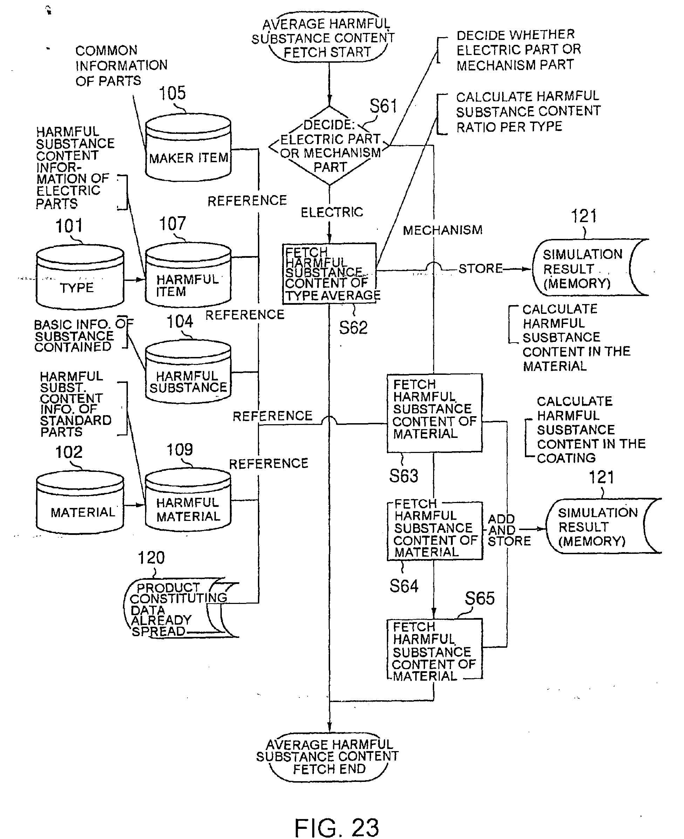

Fig. 23 shows a flow of a processing procedure of the calculation procedure of the average harmful substance content in step S55 of Fig. 22. In the following processing steps, the processing and control which can be executed on the computer are performed by the server computer.

It is decided whether a part is an electric part or a mechanism part (step S61). This decision is performed as follows. If a type is set in the maker item table 105 (see Fig. 4), the part is decided to be an electric part, and if a material is set, the part is decided to be a mechanism part.

When the decision of step S61 results in an electric part, a type average harmful substance content is fetched by referencing the maker item table 105 containing parts common information, the harmful item table 107 containing a type and a harmful substance content of the electric part, and the spread apparatus constituting data 120 (step S62). And the simulation result data 121 is stored in the memory.

In case of a mechanism part, a harmful substance content contained in the material of the mechanism part is calculated from the weight of the mechanism part (step S63).

From a surface area of the mechanism part, a harmful substance amount contained in the plating is calculated (step S64).

From a surface area of the mechanism part, a harmful substance content contained in the coating is calculated (step S65). A sum of these results is stored as the simulation result data 121 in the memory.

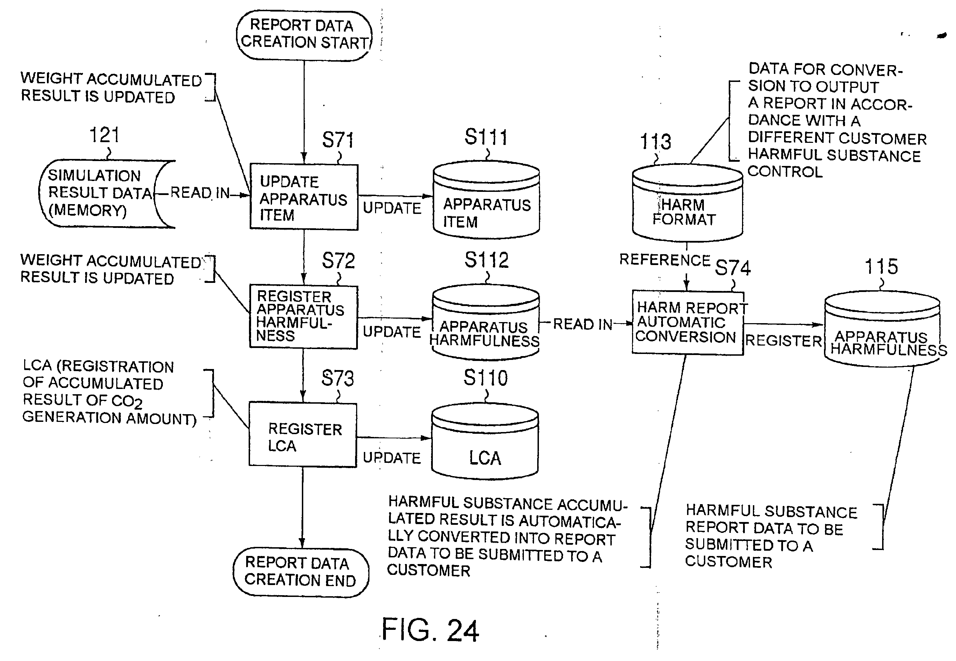

Fig. 24 shows a flow of a report data output procedure according to the embodiment of the present invention. In the following processing steps, the processing and control which can be executed on the computer are performed by the server computer.

The simulation result data 121 is read in from the memory and information (weight accumulation result) of the apparatus item table 11 of the environment database 20 is updated (step S71).

The harmful substance accumulation result is registered in the apparatus harmfulness table 112 of the environment database 20 (step S72).

The LCA accumulation result is registered in the LCA table 110 of the environment database 20 (step S73).

By referencing the harm format table 113 containing data for conversion for outputting data corresponding to the harmful substance control method which varies depending on a customer, information of the apparatus harmfulness table 112 is read in and converted into report data for submitting a harmful substance accumulation result to a customer (step S74), and the harmful substance content report data to be submitted to the customer is registered in the apparatus harmfulness report table 115 of the environment database 20.

In the embodiment of the present invention, when no environment information has been collected for parts of the same type as the electric part of the constituting data , the same type registered in the database is used to calculate a weighted mean of the type unit at real time and the result is accumulated. When no environment information for a mechanism part is collected, information on the material, plating, and coating is accumulated. As a result, even the environment information collection is insufficient, it is possible to perform a simulation with a high accuracy. That is, by introducing the system of the present invention, it is possible to expect environment preservation in the apparatus industry.

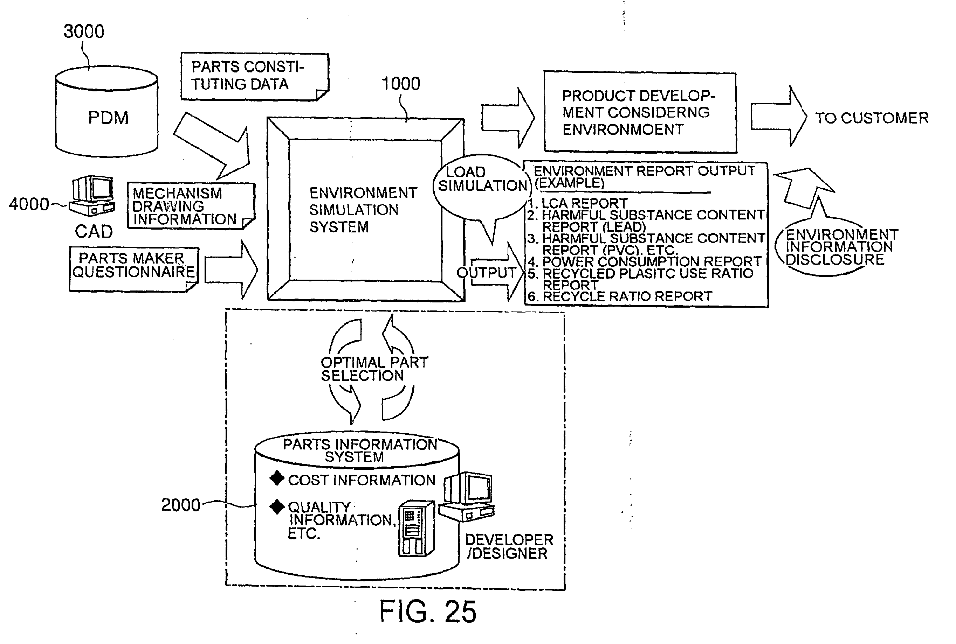

Next, referring to Fig. 25, explanation will be given on another embodiment of the present invention. Prior to explaining the system of Fig. 25, firstly, explanation will be given on the relationship between parts considering the environment and the cost. Normally, parts considering the environment costs more than parts not considering the environment. Accordingly, a cost of an apparatus consisting of the parts considering the environment tends to increase. The apparatus cost increase results in lowering in apparatus competition force on the market. Thus, it is necessary to produce an apparatus considering the environment at as a lower cost as possible.

Moreover, recently, the Green. Purchase Law has been enforced and apparatus makers need to purchase parts preferentially from a company which actively wrestles with the environment problem. Thus, in order to purchase parts preferentially from such a company, it is necessary to control information on wrestling with the environment problem of parts companies (ISO140001 obtained, use/non-use of harmful substance during production and the like) in the environment database. For this, the environment simulation system is constituted as follows. An apparatus maker obtains information on wrestling with the environment problem through a questionnaire from each of the parts makers and stores replies to the questionnaire in the database, so that in the parts selection stage, the wrestling information can be referenced and searched at real time.

On the other hand, quality, cost, and the like of each part are controlled as parts information by the parts information system.

The system shown in Fig. 25 includes an environment simulation system 1000 having also the aforementioned environment-wrestling information in the database and a parts information system 2000, which systems are linked to each other. Here, the environment simulation system 1000 is used to select parts considering the environment. The database of the environment simulation system 1000 contains parts constituting data and mechanism drawing data given from a product data management system (PDM) 3000 and a CAD system 4000 as well as replies to the questionnaire from parts makers. On the other hand, the database of the parts information system 2000 contains parts cost information, quality information, and the like.

In this example, among the information stored in the database of the environment simulation system 1000, environment information of electric parts and mechanism parts (harm rank of a harmful substance, harmful substance type, weight, use, and the like) is data-linked together with the maker wrestling information, to the parts information system 2000. Accordingly, when designing an apparatus, simulation for selecting an optimal parts is repeated on the unit and product level by using the parts quality and cost information (parts information) from the parts information system 2000 and the environment information from the environment simulation system 1000. This enables realization of a product design considering the environment as well as reduction of the production cost. Thus, in this embodiment, it is possible to develop an apparatus considering the environment and to output an environment report such as the LCA report to be submitted as environment information to a customer.

Accordingly, in this embodiment, by linking the environment simulation system 1000 to the parts information system 2000, it is possible to compare and examine the environment and cost at the stage of selecting parts, thereby enabling a balanced design considering the environment and cost at an earlier stage of designing. Moreover, by storing the environment-wrestling information of parts makers as a database of the environment simulation system 1000 and referencing this wrestling information, it is possible to select a parts maker which seriously consider the environment.

It should be noted that in Fig. 25, the environment simulation system 1000 has been explained assuming that averaging of environment information of a part of an identical type is performed for a part whose environment information is not registered. However, calculation such as averaging is not necessarily be performed and it is enough only to indicate that the environment information is not registered.

The present invention has been explained through the embodiments. Contents of the drawings are not to limit the present invention but only for explanation of the present invention. As is clear for those skilled in the art, the present invention may be modified without departing from the scope of the claims.

[Effects of the Invention]

As has been described above, the present invention has the following effects.

The first effect of the present invention is that a simulation can be executed with a high accuracy even when collection of environment information is insufficient.

This is because the environment information of a part not collected is calculated by averaging known environment information of the part. In the present invention, contents of the database storing the environment information is increased by public information and information provided from a parts maker, thereby improving the accuracy of the evaluation result.

The second effect of the present invention is that when submitting to information of a product delivered to the customer, it is possible to provide environment information in accordance with the management principle of the customer.

This is because an evaluation result of the environment information is output in accordance with the rank information corresponding to the management principle of the customer.

The third effect of the present invention is that the system can be introduced in a short time.

This is because in the present invention, parts information in the database directly uses information (contents) of a parts maker which is related to the parts name codes of an apparatus supplier via the item relation information. When introducing the system to another enterprise, what is necessary is only to prepare the item relation information.

The fourth effect of the present information is to reduce the TOC of the system utilization.

This is because in the present invention, the system is connected to the Internet or intranet and any function of the system can be accessed from the existing browser mounted on a terminal and there is no need of installing dedicated software and setting environment. Moreover, in the present invention, when constructing a database storing environment information, environment information of a parts maker is utilized as it is and there is no need of inputting data for an apparatus supplier. This can reduce the work cost. According to the present invention, it is possible to obtain a report output of an image such as a graph displayed on the screen from the browser on the client terminal.

The fifth effect of the present invention is that it is possible to obtain environment information evaluation data of an apparatus in advance when trial-producing an apparatus, which enables product assessment and green design.

This is because in the present invention, for a newly designed apparatus, environment information is calculated from apparatus constituting data.

The sixth effect of the present invention is that multi-vendor purchase is facilitated because parts environment information is managed by maker item names.

The seventh effect of the present invention is that simulation work efficiency is improved.

This is because the simulation work is separated from the simulation result output, so that a simulation result can be registered as report output information.

The eighth effect of the present invention is that an appropriate processing form can be selected in accordance with a search data amount.

This is because a multi-user interface structure is used in which interface can be selected in accordance with the search data amount.

## Claims

1. An environment information evaluation apparatus for use in calculating an evaluation value of environment information of a product, by referencing storage means for containing and controlling environment information related to each of parts and by accumulating environment information related to each of the parts by the use of a parts list constituting the product,

said apparatus comprising:

calculation means for judging, with regard to the parts included in the product, whether or not the storage means registers environment information of the parts, the calculation means performing a predetermined calculation of environment information, in relation to non-registered parts to which no environment information is stored in the storage means,
the predetermined calculation being carried out by using environment information related to parts similar in type and material to non-registered parts, so as to obtain the evaluation value of environment information of the parts constituting the product.

2. An environment information evaluation apparatus for use in calculating an evaluation value of environment information of a product, by referencing storage means for containing and controlling environment information related to each of electric parts and by accumulating environment information related to each of the electric parts by the use of a parts list constituting the product,

said apparatus comprising:

calculation means for judging, with regard to the electric parts constituting the product, whether or not the storage means registers environment information of the parts, the calculation means performing an averaging processing of environment information, in relation to non-registered parts to which no environment information is stored in the storage means,
the averaging processing being carried out by using the environment information stored in the storage means in connection with a plurality of electric parts that are the same species as the non-registered electric parts, so as to obtain the evaluation value of environment information of that electric part constituting the product.

3. An environment information evaluation apparatus for calculating environment information of a product by referencing storage means for containing and controlling environment information related with a material and surface processing of a mechanism part and by accumulating environment information of the parts by using a parts list constituting a product,

said apparatus comprising:

calculation means for calculating, with regard to the mechanism part constituting the product, an evaluation value of environment information of the mechanism part from information on a material weight, a surface area, and surface processing of the mechanism part by using environment information of the material registered in the storage means.

4. An environment information simulation system comprising:

a database for registering parts environment information in advance;
search means for searching the database about a part constituting a product;
environment information evaluation means for calculating an evaluation value of the environment information of the part by using environment information of the object part if its environment information is registered in the database, or by averaging environment information of a part of the same type or the same material as the search object part registered in the database if environment information of the search object part is not registered in the database; and
environment information evaluation result output means for outputting an evaluation result of the environment information calculated for the product.

5. The environment information simulation system according to claim 4, wherein environment information of the search object part is calculated from a weight of the search object part in accordance with the part environment information registered in the database.

6. The environment information simulation system according to claim 4, wherein environment information of a search target electric part is calculated by weighted mean processing environment information of a plurality of electric parts whose part items are registered in the database, and which are of the same species as the search target electric part, and whose environment information is registered.

7. The environment information simulation system according to claim 4, wherein the database contains and manages information which is related to a mechanism part and which includes a predetermined chemical substance content per unit weight of a material of the mechanism part and a predetermined chemical substance content per unit area of plating and coating, and

a chemical substance content of the search target mechanism part is calculated from the material weight and the plating and/or coating area of the search target mechanism part.

8. The environment information simulation system according to claim 4, said system further comprising evaluation value report output means which is separate from the environment information evaluation means, wherein a result of evaluation of the environment information is stored as report output information in the storage means.

9. The environment information simulation system according to claim 4, wherein environment information of a part registered in the database is managed in the database by a maker item which is specified by item information of a parts maker which provides the parts, and an item name code of a product supplier is related to a maker item of the parts maker via item relation information.

10. The environment information simulation system according to claim 4, said system further comprising:

rank division information for dividing a predetermined chemical substance into a plurality of ranks to be controlled in the database in accordance with a control principle, the rank division information being provided in accordance with environment information control principle for each customer to which the product is to be delivered, and

means for conversion to the rank division in accordance with the control principle of a customer upon output of a report to the customer with respect to the calculated environment information evaluation value.

11. The environment information simulation system according to claim 4, said system further comprising constituting data spread means for automatically spreading a constitutional data consisting of a product constituting parts information, so that parts information is spread hierarchically from a parent item to a child item and to a grandchild item.

12. The environment information simulation system according to claim 4, said system further comprising constituting data spread means for inputting a constitutional data of the product and if the constituting data is constituting data of hierarchical structure, spreading the data up to parts of the lowest level, and storing the spread product constituting data in the storage means,

wherein the environment information evaluation means calculates an evaluation value of environment information of a part from the spread product constituting data stored in the storage means.

13. The environment information simulation system according to claim 4, wherein the search means selects one of the following in accordance with the number of search items:

interface by entering from a terminal;
interface for entering a file containing search items, performing search, and displaying a search result on the terminal; and
interface for performing search in batch mode and storing a search result in a file.

14. The environment information simulation system according to claim 4, wherein connection is available to a technical information database providing technical information data, and

environment information related to a product to be developed is output from item information of a technical information database and from environment information of the part.

15. The environment information simulation system according to claim 4, wherein at least one of the following is output as the environment information evaluation value:

a harmful substance content list containing harmful substance content states; and
an item name code list for outputting a harmful substance content state and environment information including a $CO_2$ generation amount for each item name code of the part.

16. The environment information simulation system according to claim 8, wherein the report output includes:

a report indicating a harmful substance content state; and
an LCA (life cycle assessment) report.

17. The environment information simulation system according to claim 4, said system comprising a server apparatus or a server apparatus group including the database, the search means, the environment information evaluation means, and the environment information evaluation result output means, so that a user can access to the environment information system from a terminal browser connected to the server apparatus via the Internet or Intranet.

18. The environment information simulation system according to claim 17, wherein a report including a graph can be output by specifying printing from the terminal browser.

19. An environment information simulation method using a database for registering parts environment information in advance; the method comprising steps of:

> searching the database about a part constituting a product; and
> calculating an evaluation value of the environment information of the part by using environment information of the object part if its environment information is registered in the database, or by averaging environment information of a part of the same type or the same material as the search object part registered in the database if environment information of the search object part is not registered in the database.

20. The environment information simulation method according to claim 19, wherein environment information of a search object part is calculated by using a weight of the search object part in accordance with the environment information of the part registered in the database.

21. The environment information simulation method according to claim 19, wherein environment information of a search object electric part is calculated by averaging environment information of an electric part whose part item is registered in the database, and which is of the same type as the search object electric part, and whose environment information is registered in the database.

22. The environment information simulation method according to claim 19, wherein the database contains and controls information on a mechanism part including a predetermined chemical substance content per unit weight of a material of the mechanism part and a predetermined chemical substance content per unit area of plating and coating, and

> a chemical substance content of the search target mechanism part is calculated from the material weight and the plating and/or coating area of the search target mechanism part.

23. The environment information simulation method according to claim 19, wherein calculation of an evaluation value of environment information is performed separately from report output processing of the calculated environment information evaluation value, and

> a result of evaluation of the environment information is stored as report output information in the storage means.

24. The environment information simulation method according to claim 19, wherein environment information of a part registered in the database is controlled in the database by a maker item which is item information of a parts maker which provides the part, and an item name code of a product supplier is related to the maker item of the parts maker by item relation information.

25. The environment information simulation method according to claim 19, which contains rank division information for dividing and controlling a predetermined chemical substance into a plurality of ranks in the database in accordance with a control principle, and for complying with an environment information control principle for each customer, and

> said method further comprising a step of outputting a report to the customer for the calculated environment information evaluation value so as to convert the report to the rank division in accordance with the control principle of the customer.

26. The environment information simulation method according to claim 19, said method further comprising a step of automatically spreading the constitutional data consisting of the product constituting parts information so as to hierarchically spread the constitutional data from a parent item to a child item and to a grandchild item.

27. The environment information simulation method according to claim 19, wherein the constitutional data of the product is input, and if the constitutional data is a constitutional data of a hierarchical structure, the constitutional data is spread up to the parts of the lowest level, and an evaluation value of environment information is calculated from the spread constituting data.

28. The environment information simulation method according to claim 19, wherein environment information related to a product to be developed is output from part information of the database providing a technical information data and from environment information of the part.

29. The environment information simulation method according to claim 19, wherein at least one of the following is output as the environment information evaluation value:

> a harmful substance content list containing harmful substance content states; and
> an item name code list for outputting a harmful substance content state and environment information including a $CO_2$ generation amount for each item name code of the part.

**30.** The environment information simulation method according to claim 23, wherein the report output includes:

a report indicating a harmful substance content state; and
an LCA (life cycle assessment) report.

**31.** A recording medium containing a program for executing the environment evaluation of a part by using a database in which parts environment information is registered in advance,
said medium causing a computer to perform

(a) processing of searching the database to find whether the database contains environment information of the part,
(b) processing of executing accumulation by using the environment information of the part if the environment information is registered in the database,
(c) processing of averaging the environment information of a part of the same type as the part registered in the data base if no environment information of that part is registered in the database to calculate an evaluation value of the environment information of the part and to accumulate the evaluation values, and
(d) processing of outputting an evaluation result of the calculated environment information.

**32.** The recording medium according to claim 31, wherein said medium contains a program for causing the computer to execute processing of calculating the environment information of the search object part from a weight of the search object part in accordance with the environment information of the part registered in the database.

**33.** The recording medium according to claim 31, which contains a program for causing the computer to execute processing of calculating the environment information of a search object electric part by averaging the environment information of an electric part of the same type as the search target electric part whose part item is registered in the database and whose environment information is registered.

**34.** The recording medium according to claim 31, wherein said database controls and maintains a predetermined chemical substance content per unit weight of a material of a mechanism part and a predetermined chemical substance content per unit area of plating and coating,
said program causing the computer to execute processing of calculating a chemical substance content of the search object mechanism part from its material weight, plating and/or coating area.

**35.** The recording medium according to claim 31, which is provided with the calculation processing of an environment information evaluation value and a report output of the calculated evaluation value of the environment information separately from each other,
said program causing the computer to execute processing of registering an environment information evaluation result as report output information in the storage means.

**36.** The recording medium according to claim 31, wherein the environment information of the part registered in the database is controlled in the database by a maker item which is item information of a parts maker which provides the part, and an item name code of a product supplier is related to the maker item of the parts maker by item relation information,
said program causing the computer to execute processing of searching the maker item of the parts maker from the item code of the product supplier.

**37.** The recording medium according to claim 31, which contains rank division information for dividing and controlling a predetermined chemical substance into a plurality of ranks in the database in accordance with a control principle, and for complying with an environment information control principle for each customer, and
said program causing the computer to execute processing of outputting a report to the customer for the calculated environment information evaluation value so as to convert the report to the rank division in accordance with the control principle of the customer.

**38.** The recording medium according to claim 31, wherein said program causes the computer to execute processing of automatically spreading the constitutional data consisting of the product constituting parts information so as to hierarchically spread the constitutional data from a parent item to a child item and to a grandchild item.

**39.** The recording medium according to claim 31, wherein said program causes the computer to execute processing of inputting the constitutional data of the product, spreading the constitutional data up to the parts of the lowest level if the constitutional data is a constitutional data of a hierarchical structure, and calculating an evaluation value of environment information from the spread constituting data.

**40.** The recording medium according to claim 31, wherein said program causes the computer to execute processing of outputting, as an evaluation value output of the environment information, a harmful substance content list containing harmful substance content states, and an item name code list for outputting a harmful substance content state and environment information including a $CO_2$ generation amount for each item name code of the part.

41. The recording medium according to claim 31, wherein said program causes the computer to output, as a report output, a report indicating a harmful substance content state and an LCA (life cycle assessment) report.

42. An environment evaluation business model method for providing an environment business to evaluate and indicate environment information of a product, wherein a simulation of an environment information evaluation value of a part constituting a product is performed at a development stage of the product by using environment information on the part registered in the database in advance or by performing a predetermined calculation for environment information on a part equivalent to the aforementioned part registered in the database in advance; and a simulation result and/or a predetermined report created in accordance with the simulation result are output.

43. An environment evaluation business model method for providing an environment business to evaluate and indicate environment information of a product, wherein a simulation of an environment information evaluation value of a part constituting a product is performed at a delivery stage of the product to a customer by using environment information on the part registered in the database in advance or by performing a predetermined calculation for environment information on a part equivalent to the aforementioned part registered in the database in advance; and a predetermined simulation report created is created so as to be submitted to the customer.

44. A program for executing the environment evaluation of a part by using a database in which parts environment information is registered in advance, said program comprising:

(a) a step of searching the database to find whether the database contains environment information of the part,
(b) a step of executing accumulation by using the environment information of the part if the environment information is registered in the database,
(c) a step of averaging the environment information of a part of the same type as the part registered in the data base if no environment information of that part is registered in the database to calculate an evaluation value of the environment information of the part and to accumulate the evaluation values, and
(d) a step of outputting an evaluation result of the calculated environment information.

45. The program according to claim 44, which contains a step for causing the computer to execute processing of calculating the environment information of the search object part from a weight of the search object part in accordance with the environment information of the part registered in the database.

46. The program according to claim 44, which contains a step for calculating the environment information of a search object electric part by averaging the environment information of an electric part of the same type as the search target electric part whose part item is registered in the database and whose environment information is registered.

47. The program according to claim 44, wherein said database controls and maintains a predetermined chemical substance content per unit weight of a material of a mechanism part and a predetermined chemical substance content per unit area of plating and coating,
said program containing a step of calculating a chemical substance content of the search object mechanism part from its material weight, plating and/or coating area.

48. The program according to claim 44, which separately performs a calculation step of an environment information evaluation value and a step of a report output of the calculated evaluation value of the environment information separately,
and which has a step of registering an environment information evaluation result as report output information in the storage means.

49. The program according to claim 44, wherein the environment information of the part registered in the database is controlled in the database by a maker item which is item information of a parts maker which provides the part, and an item name code of a product supplier is mutually related to the maker item of the parts maker by item relation information,
and which has a step of searching the maker item of the parts maker from the item code of the product supplier.

50. The program according to claim 44, which contains a step of dividing and controlling a predetermined chemical substance into a plurality of ranks in the database in accordance with a control principle, and a step of ranking it in accordance with an environment information control principle for each customer, and

said program further containing a step of outputting a report to the customer for the calculated environment information evaluation value so as to convert the report to the rank division in accordance with the control principle of the customer.

51. The program according to claim 44, wherein said program has a step of automatically spreading the constitutional data consisting of the product constituting parts information so as to hierarchically spread the constitutional data from a parent item to a child item and to a grandchild item.

52. The program according to claim 44, which has a step of inputting the constitutional data of the product, spreading the constitutional data up to the parts of the lowest level if the constitutional data is a constitutional data of a hierarchical structure, and calculating an evaluation value of environment information from the spread constitutional data.

53. The program according to claim 44, which has a step of outputting, as an evaluation value output of the environment information, a harmful substance content list containing harmful substance content states, and an item name code list for outputting a harmful substance content state and environment information including a $CO_2$ generation amount for each item name code of the part.

54. The program according to claim 44, which has a step of outputting, as a report output, a report indicating a harmful substance content state and an LCA (life cycle assessment) report.

55. An environment information simulation system for calculating an environment information evaluation value of a part constituting a product by using environment information of the part registered in a database and outputting a calculated evaluation result of the environment information; and a parts information system holding cost information on the part, wherein the environment information simulation system is linked to the parts information system and references parts environment information and the cost information, thereby selecting an optimal part for the product.

56. The environment information simulation system according to claim 55, wherein the database further contains information on a wrestling state of a parts maker with environment problems.

57. The environment information simulation system according to claim 55, wherein the environment simulation system includes: environment information evaluation means for evaluating an evaluation value of environment information of the object part by using environment information registered in the database if environment information of the object part is contained in the database, or by calculating environment information of a part of the same type or the same material as the object material registered in the database if environment information of the object part is not registered in the database; and environment information evaluation result output means for outputting the evaluation result of environment information which has been calculated for the product.

30 NETWORK

10

TERMINAL ~16

SEARCH MEANS ~11

ENVIRONMENT
INFORMATION
EVALUATION MEANS ~12

20

ENVIRONMENT
DATABASE

ENVIRONMENT
INFORMATION
EVALUATION RESULT ~13
OUTPUT MEANS

CONSTITUTIONAL
DATA
SPREAD MEANS ~14

15

OUTPUT
FILE

FIG. 1

FIG. 2

(a) NEW DESIGN 200

QUALITY GUARANTEE — PRODUCT ASSESSMENT — INDICATION

DEVELOP-MENT 201 — CAD — OUTPUT — 202 CONSTITUTIONAL DATA

PRODUCTION TECHNIQUE 202 CONSTITUTIONAL DATA — TRANSMISSION — 203 VF-ECO ·HARMFUL ·LCA AND THE LIKE — CALCULATION

$CO_2$ — Pb

(b) ALREADY DESIGNED

CUSTOMER — REQUEST FOR ENVIRONMENT DATA 204 — TRADING — REQUEST

PRODUCTION 205 TECHNIQUE — BASIC SYSTEM TECHNICAL IN-FORMATION DB TRANSMISSION — TRANS-MISSION 206 — CONSTITUTIONAL DATA — 207 VF-ECO ·HARMFUL ·LCA AND THE LIKE — CALCULATION

$CO_2$ — Pb

1. FETCH CONSTITUTING DATA

2. SIMULATE ENVIRONMENT INFORMATION

3. OUTPUT A REPORT

31

TECHNICAL
INFORMATION
MAIN FRAME

DATA
DOWNLOAD

32
32A

ITEM
DATA

CAPABLE OF SPREADING
APPARATUS STRUCTURE
ALREADY DESIGNED

TECHNICAL
INFORMATION SERVER

30

INTERNET

SEARCH

39 OTHER
DEPARTMENT

CLIENT    PRINTER

CONSIDERING
DATA USE FROM
THE OTHER
DEPARTMENTS

SEARCH

REPORT
APPLICABLE
TO INTERNET

NO NEED OF
INSTALING
SOFTWARE

MULTI-USER
INTERFACE

33 SERVER

VFSERVER

39

ENVI-
RON-
MENT
DATA

35

LINKED

36    37

SEARCH

38 USER
DEPART-
MENT

25

DB SERVER    APPLICATION
SERVER

REPORT
SERVER

WEB SERVER

PRINTING

CLIENT    PRINTER

OPERATING
24 HOURS
365 DAYS

LINKED
TO
WEB/DB

JAVA
REPORT
FUNCTION

USER
INTER-
FACE

FIG. 3

FIG. 4

103 — MAKER
MAKER NAME (PN)

101 — ITEM TYPE
ITEM TYPE (PK)
$CO_2$ GENERATION AMOUNT

102 — MATERIAL
SYMBOL (PK)
MATERIAL CLASSIFICATION (CK)
$CO_2$ GENERATION AMOUNT

109 — HARMFUL MATERIAL
SYMBOL (PK)(FK)
HARMFUL SUBSTANCE NAME (PK)(FK)
CONTAINED OR NOT (CK)
CONTENT
INPUT DATE

113 — HARMFUL MATERIAL
FORMAT (PK)
STANDARD HARMFUL SUBSTANCE NAME (PK)
MODIFIED HARMFUL SUBSTANCE NAME
HARM RANK
HARM LEVEL

105 — MAKER ITEM
MAKER ITEM NAME (PK)
MAKER NAME (FK)
WEIGHT
POWER CONSUMPTION
SURFACE AREA
TYPE (FK)
MATERIAL (FK)
PLATING (FK)
COATING (FK)
$CO_2$ GENERATION AMOUNT
INPUT DATE

107 — HARMFUL ITEM
MAKER ITEM NAME (PK)(FK)
HARMFUL SUBSTANCE NAME (PK)(FK)
CONTAINED OR NOT (CK)
CONTENT
INPUT DATE

104 — HARMFUL SUBSTANCE
HARMFUL SUBSTANCE NAME (PK)
HARM RANK (CK)
HARM LEVEL (CK)

108 — TYPE DECISION
TYPE (PK)(FK)
NAME CODE (PK)(UQ)

114 — FORMAT
FORMAT (PK)
EMPLOYED

ITEM RELATION — 106
MAKER ITEM NAME (PK)(FK)(UQ)
ITEM NAME CODE (PK)
INPUT DATE

LCA — 110
ITEM NAME CODE (PK)(FK)
LIFE STAGE NUMBER
LIFE STAGE (PK)(CK)
$CO_2$ GENERATION AMOUNT
INPUT DATE

APPARATUS ITEM
ITEM NAME CODE (PK)(FK)
APPARATUS NAME
POWER CONSUMPTION
WEIGHT
RECYCLED PLASTIC WEIGHT
ACCUMULATED WEIGHT
ACCUMULATED WEIGHT OF ELECTRIC PARTS
ACCUULATED WEIGHT OF MECHANISM PARTS
ACCUMULATED WEIGHT OF METAL
ACCUMULATED WEIGHT OF PLASTIC
INPUT DATE
— 111

APP. HARMFULNESS — 112
ITEM NAME CODE (PL)(FK)
HARMFUL SUBSTANCE NAME (PK)(FK)
CONTENT
INPUT DATE

APP. HARMFULNESS REPORT — 115
FORMAT (PK)(FK)
TRADE ITEM CODE (PK)(FK)
HARMFUL SUBSTANCE NAME (PK)(FK)
HARM RANK (CK)
HARM LEVEL (CK)
CONTENT

116
ITEM
ITEM NAME CODE (PK)
MODEL NAME
STANDARD MARK
NAME CODE
-----

117
NAME CODE
#NAME CODE
JAPANESE NAME
ENGLISH NAME
DB REGISTRATION DATE
DC UPDATING DATE

EP 1 298 555 A1

25

**105**

**MAKER ITEM**

MAKER ITEM NAME (PK)
MAKER NAME (FK)
WEIGHT
POWER CONSUMPTION
SURFACE AREA
TYPE (FK)
MATERIAL (FK)
PLATING (FK)
COATING (FK)
CO2 GENERATION AMOUNT
INPUT DATE

⌐ INFORMATION ON
∟ MAKER ITEM

**116**

**ITEM**

ITEM CODE (PK)
MODEL NAME
STANDARD
MARK
NAME CODE
- - - - -

⌐ NAME CODE CAN BE
  FETCHED FROM ITEM
∟ INFORMATION

⌐ TABLE FOR DECIDING
  THE TYPE FROM
∟ THE NAME CODE

**101**

**TYPE**

TYPE (PK)
CO2 GENERA-TION AMOUNT

**108**

**TYPE DECISION**

TYPE (PK)(FK)
NAME CODE (PK) (UQ)

**117**

**NAME CODE**

NAME CODE
JAPANESE NAME
ENGLISH NAME
DB REGISTRA-TION DATA
DB UPDATING DATA

⌐ TYPE CAN BE
  DECIDED FROM
∟ THE NAME CODE

⌐ TABLE CONTAINING PARTS
  LIST OF ELECTRIC PARTS
  AND A CO2 GENERATION
∟ AMOUNT OF EACH TYPE

⌐ TABLE FOR RELATING
  THE NAME CODE TO
  ENGLISH/JAPANESE
∟ NAME

# FIG. 5

INFORMATION ON
MAKER ITEM

105

MAKER ITEM

MAKER ITEM
 NAME (PK)
MAKER NAME (FK)
WEIGHT
POWER
 CONSUMPTION
SURFACE AREA
TYPE (FK)
MATERIAL (FK)
COATING (FK)
$CO_2$
 GENERATION
 AMOUNT
INPUT DATE

102

MATERIAL

SYMBOL (PK)
MATERIAL
CLASSIFICA-
TION (CK)
$CO_2$
GENERATION
AMOUNT

TABLE CONTAINING A LIST OF
MATERIAL, PLATING, AND COATING
OF A CONSTITUTING PART AND A
$CO_2$ GENERATION AMOUNT

# FIG. 6

FIG. 7

MAKER — 103

| MAKER |
|---|
| MAKER NAME (PK) |

INFORMATION ON MAKER ITEM — 105

| MAKER ITEM |
|---|
| MAKER ITEM NAME (PK)<br>MAKER NAME (FK)<br>WEIGHT<br>POWER CONSUMPTION<br>SURFACE AREA<br>TYPE (FK)<br>MATERIAL (FK)<br>PLATING (FK)<br>COATING (FK)<br>$CO_2$ GENERATION AMOUNT<br>INPUT DATE |

INFORMATION ON PARTS MAKER FROM WHICH PARTS ARE TO BE PURCHASED

HARMFUL MATERIAL SUBSTANCE INFORMATION OF EACH MAKER CAN BE COMPARED

**105**

**MAKER ITEM**

MAKER ITEM NAME (PK)
MAKER NAME (FK)
WEIGHT
POWER CONSUMPTION
SURFACE AREA
TYPE (FK)
MATERIAL (FK)
PLATING (FK)
COATING (FK)
CO2 GENERATION AMOUNT
INPUT DATE

**07**

**HARMFUL SUBS-TANCE NAME**

MAKER ITEM NAME (PK)(FK)
HARMFUL SUBSTANCE NAME (PK)(FK)
CONTAINED OR NOT (CK)
INPUT DATE

**104**

**HARMFUL SUBSTANCE**

HARMFUL SUBSTANCE NAME (PK)
HARM RANK (CK)
HARM LEVEL (CK)

HARM RANK:
HARMFUL SUBSTANCE IS DEVIDED INTO THREE DEGREES: INHIBIT, EVASION, AND CONTROL WHICH IS DECIDED BY COOPERATE STANDARD

HARM LEVEL:
THE HARM RANK IS REPRESENTED BY A NUMBER: INHIBIT=1, EVASION=2, AND CONTROL=3

**113**

**HARMFUL MATERIAL**

FORMAT (PK)
STANDARD
HARMFUL SUBS. NAME (PK)
MODIFIED SUBS. NAME
HARM RANK
HARM LEVEL

TABLE FOR DESCRIPTION OF A HARMFUL SUBSTANCE NAME AND HARM RANK CONVERSION TO COPE WITH DIFFERENT HARMFUL SUBSTANCE CONTROL PRINCIPLES DEPENDING ON A CUSTOMER ENTERPRISE

**APPARATUS HARM-FULNESS REPORT**

112 — FORMAT (PK)(FK)
ITEM NAME CODE (PK)(FK)
HARMFUL SUBST. NAME (PK)(FK)
HARM RANK (CK)
HARM LEVEL (CK)
CONTENT

**114**

**FORMAT**

FORMAT (PK)
EMPLOYED

A LIST OF CUSTOMER ENTERPRISE CONTROL PRINCIPLES OF HARMFUL SUBSTANCES

TABLE OF HARMFUL SUBSTANCE CONTROL REPORT DATA TO BE SUBMITTED TO A CUSTOMER

EVEN FOR ONE AND THE SAME APPARATUS, DIFFERENT REPORTS CAN BE OUTPUT IN ACCORDANCE WITH THE CONTROL PRINCIPLE OF A CUSTOMER ENTERPRISE

# FIG. 8

ONE ENTERPRISE ITEM
MAY CORRESPOND TO
A PLURALITY OF MAKER
ITEMS

116

ITEM

ITEM NAME
CODE (PK)
MODEL NAME
STANDARD
MARK
NAME CODE
- - - - -

105

MAKER NAME

MAKER ITEM NAME
 (PK)
MAKER NAME (FK)
WEIGHT
POWER
 CONSUMPTION
SURFACE AREA
TYPE (FK)
MATERIAL (FK)
PLATING (FK)
COATING (FK)
$CO_2$ GENERATION
 AMOUNT
INPUT DATE

106

ITEM RELATION

MAKER ITEM NAME
(PK)(FK)(UQ)
ITEM NAME CODE(PK)
INPUT DATE

PARTS MAKER ITEM INFOR-
MATION NOT DEPENDEING
ON THE ENTERPRISE ITEM
INFORMATION
THE CONTENTS CAN BE
UTILIZED BY A PLURALITY
OF ENTERPRISES

ITEM INFORMATION INHERENT
TO AN ENTERPRISE

RELATION INFORMATION
INDICATING WHICH ITEM OF THE
ENTERPRISE CONSISTS OF
WHICH MAKER ITEM

FIG. 9

105

MAKER NAME

MAKER ITEM NAME
 (PK)
MAKER NAME (FK)
WEIGHT
POWER
 CONSUMPTION
SURFACE AREA
TYPE (FK)
MATERIAL (FK)
PLATING (FK)
COATING (FK)
$CO_2$ GENERATION
 AMOUNT
INPUT DATE

107

HARMFUL ITEM

MAKER ITEM NAME
(PK)(FK)(UQ)
ITEM NAME CODE(PK)
INPUT DATE

ONE PART CONTAINS A
PLURALITY OF HARMFUL
SUBSTANCES

FIG. 10

109

HARMFUL
SUBSTANCE

SYMBOL (PK)(FK)
HARMFUL
SUBSTANCE NAME
(PK)(FK)
CONTAINED OR NOT
(CK)
CONTENT
INPUT DATE

IF THE WEIGHT AND THE
SURFACE AREA ARE
DETERMINED, THE HARM-
FUL SUBSTANCE CON-
TENT CAN BE CALCULATED

102

MATERIAL

SYMBOL (PK)
MATERIAL
CLASSIFICA-
TION (CK)
$CO_2$ GENE-
RATION
AMOUNT

105

MAKER NAME

MAKER ITEM NAME
(PK)
MAKER NAME (FK)
WEIGHT
POWER
  CONSUMPTION
SURFACE AREA
TYPE (FK)
MATERIAL (FK)
PLATING (FK)
COATING (FK)
$CO_2$ GENERATION
  AMOUNT
INPUT DATE

CONTAINS:
• HARMFUL SUBSTANCE
CONTENT PER UNIT WEIGHT
OF MATERIALS
• HARMFUL SUBSTANCE
CONTENT PER UNIT WEIGHT
OF PLATING
• HARMFUL SUBSTANCE
CONTENT PER UNIT WEIGHT
OF COATING

CONTAINS INFORMATION
ON MATERIAL. PLATING,
AND COATING

CONTAINS:
• WEIGHT, AND SURFACE
AREA OF THE MECHANICAL
PART
• MATERIAL, PLATING AND
COATING TYPE USED IN
THE MECHANICAL PART

FIG. 11

31

111

110

**APPARATUS ITEM**

ITEM NAME CODE (PK)(FK)
APPARATUS NAME
POWER CONSUMPTION
 WEIGHT
RECYCLED PLASTIC
 WEIGHT
ACCUMULATED WEIGHT
ACCUMULATED WEIGHT
 OF ELECTRIC PARTS
ACCUMULATED WEIGHT
 OF MECHANISM PARTS
ACCUMULATED WEIGHT
 OF METAL
ACCUMULATED WEIGHT
 OF PLASTIC
INPUT DATE

**LCA**

ITEM NAME CODE
 (PK)(FK)
LIFE STAGE NUMBER
LIFE STAGE
 (PK)(CK)
$CO_2$ GENERATION
 AMOUNT
INPUT DATE

LCA SIMULATION
RESULT IS
REGISTERED

AFTER A
PLURALITY OF
SIMULATIONS,
A STABLE
RESULT CAN
BE
REGISTERED.

HARMFUL SUBSTANCE
SIMULATION RESULT
IF ENTERED

**APPARATUS
HARMFULNESS**

ITEM NAME CODE
 (PK)(FK)
HARMFUL SUBST.
 NAME (PK)(FK)
$CO_2$ GENERATION
 AMOUNT
INPUT DATE

112

**APP. HARMFULNESS
REPORT**

FORMAT (PK)(FK)
ITEM NAME CODE
 (PK)(FK)
HARMFUL SUBST.
 NAME (PK)(CK)
HARM RANK (CK)
HARM LEVEL (CK)
CONTENT

115

MANUALLY ENTER APPARATUS
BASIC INFORMATION:
 ITEM NAME CODE
 APPARATUS NAME
 POWER CONSUMPTION
 WEIGHT
 RECYCLED PLASTIC WEIGHT
 OTHER ACCUMULATED
 INFORMATION IS AUTOMATICA-
 LLY INPUT

UPON UPDATE OF THE APPARATUS
HARMFULNESS, THE REPORT DATA IS
AUTOMATICALLY UPDATED SO AS TO
BE SUBMITTED TO A CUSTOMER

# FIG. 12

COATING

| ENVIRONMENT RISK SEARCH FILE :vf1_2000_02_02_17_19_54hcode.xls SPREAD: 6 CODES | | | | | | | | | | | | |
|---|---|---|---|---|---|---|---|---|---|---|---|---|
| ENVIRONMENT RISK SEARCH   ITEM NAME CODE UNIT TOTAL LIST | | | | | | | | | | | | |
| ITEM NAME CODE | MODEL TYPE | STAN-DARD | TYPE | MATE-RIAL | PLA-TING | QUAN-TITY | WEIGHT (mg) | POWER CONSUM-PTION(W) | SUR-FACE AREA | CO2 GENERATION AMOUNT (mg) | HARMFUL SUBSTANCE CONTENT (mg) | HARMFUL SUBSTANCE CONTENT (%) |
| XXX-XXXXXX-XXXX | CAAAB | 2 | CAPACITOR | | | 4 | 10280.0936 | 0 | 0 | 15880 | 987.48171 | 9.60577 |
| XXX-XXXXXX-XXXX | CNXXX | 2 | CONNECTOR | | | 6 | 108481.5899 | 0 | 0 | 33480 | 10533.91418 | 9.71032 |
| XXX-XXXXXX-XXXX | LYYZX | 1 | INDUCTOR (COIL) | | | 18 | 450 | 0 | 0 | 71460 | 18 | 4 |
| XXX-XXXXXX-XXXX | IC001 | 3 | IC | | | 76 | 0 | 0 | 0 | 3906400 | 0 | 0 |
| XXX-XXXXXX-XXXX | 1C3VXW | 1 | CABLE | | | 4120 | 38989.36424 | 0 | 0 | 66671.81285 | 3532.25683 | 9.05954 |
| XXX-XXXXXX-XXXX | SHILED CASE | | | C2801P | 21 | 2 | 703987.2 | 0 | 20352 | 887023.872 | 138.3936 | 0.01966 |
| | | | | | TOTAL | | 862188.2477 | 0 | 20352 | 4980915.685 | 15210.04632 | 1076412 |

| HIT RATIO | | TOTAL OF ELECTRIC AND MECHANISM PARTS | | | |
|---|---|---|---|---|---|
| DIVISION | NUMBER OF CASES | HIT RATIO | DIVISION | CO2 GENERATION AMOUNT(mg) | HARMFUL SUBSTANCE CONTENT (mg) |
| REGISTRATION | 2 | 33.30% | ELECTRIC | 4093891.813 | 15071.65272 |
| AVERAGE | 4 | 66.70% | MECHANISM | 887023.872 | 138.3936 |
| MISS | 0 | 0.00% | | | |
| TOTAL | 6 | 100.00% | TOTAL | 4980915.685 | 15210.04632 |

FIG. 13

| ENVIRONMENT RISK SEARCH FILE:yugai.xls SPREAD: 6 CODES<br>ENVIRONMENT RISK SEARCH  HARMFUL SUBSTANCE UNIT TOTAL LIST | | |
|---|---|---|
| HARM RANK | HARMFUL SUBSTANCE NAME | HARMFUL SUBSTANCE CONTENT (mg) |
| EVASION | LEAD | 1153.6543 |
| EVASION | ORGANIC PHOSPHOR | 86.61 |
| EVASION | HEXAVALENT CHROMIUM | 5.54427 |
| EVASION | ARSENIC | 0.322 |
| EVASION | CADMIUM | 0.0533 |
| EVASION | METHLENE CHLORIDE | 0 |
| CONTROL | HALOGEN | 6517.47158 |
| CONTROL | PVC | 3429.58482 |
| CONTROL | ANTIMONY | 2364.12875 |
| CONTROL | SILVER | 674.65881 |
| CONTROL | BERYLLIUM | 437.56046 |
| CONTROL | PHTHALIC ACID SALT | 306.708 |
| CONTROL | ORGANIC TIN | 156.6 |
| CONTROL | COBALT | 77.15033 |
| CONTROL | BARIUM | 0 |
| CONTROL | TBBA | 0 |
| | TOTAL | 15210.04632 |
| HARM RANK UNIT TOTAL | | |
| "INHIBIT" SUBSTANCE CONTENT | | 0 |
| "EVASION" SUBSTANCE CONTENT | | 1246.18357 |
| "CONTROL" SUBSTANCE CONTENT | | 13963.86275 |
| TOTAL | | 15210.04632 |

# FIG. 14

| LCA (LIFE CYCLE ASSESSMENT) ) | XXX DEPARTMENT |
|---|---|
| APPARATUS NAME          ITEM NAME CODE | 2000/2/24 (Thu.) |

## LCA (LIFE CYCLE ASSESSMENT) )

LIFE STAGE

| LIFE STAGE | CO2 GENERATION AMOUNT (kg) |
|---|---|
| RAW MATERIAL PRODUCTION | 0.013 |
| PARTS PRODUCTION | 43.275 |
| ASSEMBLY | 70.800 |
| TRADING | 15.800 |
| USE | 2,957.376 |
| DISPOSAL | 7.260 |
| TOTAL : | 3,094.524 |

# FIG. 15

HARMFUL SUBSTANCE CONTENT    XXX DEPARTMENT
2000/2/24 (Thu.)

APPARATUS NAME   XXXX    ITEM NAME CODE   XXX-XXXXXX-XXXX

HARM RANK RATIO

EVASION

CONTROL

HARMFUL SUBSTANCE CONTENT RATIO

ORGANIC TIN    PVC

HEXAVALENT CHROMIUM

ANTIMONY

LEAD

BERYLLIUM

PHTALIC ACID SALT

COBALT

HALOGEN

| | CONTROL | 14.5% |
| | EVASION | 85.5% |
| | Total | 100% |

| | HCFC | 0.0% |
|---|---|---|
| | PVC | 7.4% |
| | TBBA | 0.0% |
| | ANTIMONY | 17.5% |
| | CADMIUM | 0.0% |
| | COBALT | 0.6% |
| | TETRACHROLO-ETHYLENE | 0.0% |
| | TRICHLORO-ETHYLENE | 0.0% |
| | BARIUM | 0.0% |
| | HALOGEN | 47.6% |
| | P.A.S. | 3.1% |
| | BERYLLIUM | 3.2% |
| | LEAD | 13.9% |
| | M.C. | 0.0% |
| | SILVER | 5.0% |
| | ORGANIC TIN | 1.1% |
| | ORGANIC PHOSPHOR | 0.6% |
| | H.C. | 0.0% |
| | ARSENIC | 0.0% |
| | Total | 100% |

| HARM RANK: EVASION HARMFUL SUBSTANCE NAME | CONTENT (kg) |
|---|---|
| LEAD | 0.113 |
| ORGANIC PHOSPHOR | 0.005 |
| HEXAVALENT CHROMIUM | 0.000 |
| ARSENIC | 0.000 |
| CADMIUM | 0.000 |
| HCFC | 0.000 |
| TRICHLOROETHYLENE | 0.000 |
| METHYLENE CHLORIDE | 0.000 |
| TETRACHLOROETHYLENE | 0.000 |
| HARM RANK TOTAL | 0.118 |

| HARM RANK: CONTROL HARMFUL SUBSTANCE NAME | CONTENT (kg) |
|---|---|
| HALOGEN | 0.388 |
| ANTIMONY | 0.142 |
| PVC | 0.060 |
| SILVER | 0.041 |
| BERYLLIUM | 0.026 |
| PHTHALIC ACID SALT | 0.025 |
| ORGANIC TIN | 0.009 |
| COBALT | 0.005 |
| BARIUM | 0.000 |
| TBBA | 0.000 |
| HARM RANK TOTAL | 0.696 |
| APPARATUS TOTAL | 0.814 |

FIG. 16

**FIG. 17**

ALREADY
DESIGNED WORK
FLOW START

S21
CUSTOMER
REQUEST FOR
SUBMISSION OF
ENVIRONMENT
REPORT

GRASP ENVIRONMENT RISK OF
APPARATUS ALREADY DELIVERED

S22
TRADE DEPT.
SPECIFIES A
TARGET APPA-
RATUS WHOSE
ENVIRONMENT
REPORT SHOULD
BE SUBMITTED

S23 DATA
REFERENCING

PRODUCT
TECHNIQUE DEPT.
PERFORMS
ENVIRONMENT
SIMULATION

ENVIRONMENT
DATABASE

S24
PRODUCTION
TECHNIQUE DEPT.
CREATES ENVIRON-
MENT REPORT

ENVIRONMENT REPORT TO BE
SUBMITTED TO A CUSTOMER
· HARMFUL SUBSTANCE
  CONTENT
· POWER CONSUMPTION
  COMPARISON
· RECYCLED PLASTIC USE
  RATIO
· LIFE CYCLE ASSESSMENT
· RECYCLE RATIO

S25
TRADE DEPT.
RECEIVES THE
ENVIRONMENT
REPORT

S26
CUSTOMER
RECEIVES THE
ENVIRONMENT
REPORT

ALREADY
DESIGNED WORK
FLOW END

FIG. 18

NEW DESIGN
CONSTITUTING
DATA CREATION

DATA OUTPUT

S12

DATA OUTPUT

202

201

CAD
SYSTEM

DEVELOPMENT
DEPT. OUTPUTS
PRODUCT CONSTI-
TUTING DATA

PRODUCT
CONSTITUTING
DATA

NEW DESIGN
CONSTITUTING
DATA CREATION
COMPLETE

FIG. 19

FILE ON DEVELOPMENT
DEPT. CLIENT PC

NEW DESIGN
CONSTITUTING
DATA TRANSFER
START

DATA
TARNSFER

PRODUCT
CONSTITUTING
DATA

S31

DEVELOPMENT
DEPT. TRANSMITS
CONSTITUTING
DATA

SPECIFY A FILE FROM
WEB BROUSER

202

S32

DEVELOPMENT
DEPT. TRANSMITS
CONSTITUTING
DATA

TRANSMIT A FILE
FROM WEB BROUSER

S33

VF-ECO SYSTEM
RECEIVES
CONSTITUTING
DATA

DATA
TRANSFER

122

PRODUCT
CONSTITUTING
DATA

FILE ON VF-ECO
SYSTEM SERVER

NEW DESIGN
CONSTITUTING
DATA TRANSFER
END

FIG. 20

FIG. 21

TECHNICAL
INFORMATION
DATABASE                116

SIMULATION
START

FETCH ITEM INFORMATION
OF ENTERPRISE FROM THE
TECHNIAL INFORMATION
DATA BASE
· MODEL NAME
· STANDARD DIVISION

ITEMS —REF.→ FETCH ITEM
INFORMATION          S51

105

MAKER
ITEMS    REF.

106

ITEM
RELATION   REF.

ENVI-
RON-
MENT
DATA-
BASE    104

HARMFUL
SUBSTANCES

107

HARMFUL
ITEMS

120

PRODUCT
CONSTITUTING
DATA
ALREADY
SPREAD

FETCH
MAKER ITEM
INFORMATION       S52

CHECK
HARMFUL
ITEM
INFORMATION       S53

PRESENT

REFERENCING

REFEREN-
CING

FETCH
HARMFUL
SUBSTANCE
CONTENT        S54    ABSENT

READ IN

READ IN

FETCH
AVERAGE
HARMFUL
SUBSTANCE
CONTENT        S55

SIMULATION
END

1. CONVERT ENTERPRISE ITEM INTO
   MAKER ITEN
2. FETCH MAKER ITEM INFORMATION

· WEIGHT
· SURFACE AREA
· TYPE
· MATERIAL
· PLATING
· COATING
· $CO_2$ GENERA-
  TION AMOUNT

· ITEM CODE
· HARMFUL SUBST.
· CONTENT
· CONTENT RATIO
· HARM RANK
· HARM LEVEL
· MODEL NAME
· STANDARD MARK
· TYPE
· MATERIAL
· PLATING
· COATING
· QUANTITY
· WEIGHT
· POWER
  CONSUMPTION
· SURFACE AREA
· CO2 GENERATION
  AMOUNT

STORING→ SIMULATION
RESULT DATA ～121
(MEMORY)

STORING SIMULATION
RESULT DATA ～121
(MEMORY)

FIG. 22

FIG. 23

FIG. 24

FIG. 25

EP 1 298 555 A1

## INTERNATIONAL SEARCH REPORT

| | International application No. |
|---|---|
| | PCT/JP01/03723 |

**A. CLASSIFICATION OF SUBJECT MATTER**
Int.Cl⁷  G06F17/60, G06F19/00, B09B3/00

According to International Patent Classification (IPC) or to both national classification and IPC

**B. FIELDS SEARCHED**

Minimum documentation searched (classification system followed by classification symbols)
Int.Cl⁷  G06F17/60, G06F19/00, B09B3/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2001 |
| Kokai Jitsuyo Shinan Koho | 1971-2001 | Jitsuyo Shinan Toroku Koho | 1996-2001 |

Electronic data base consulted during the international search (name of data base and, where practicable, search terms used)
JOIS(JICST)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 10-57936 A (Toshiba Corporation),<br>03 March, 1998 (03.03.98),<br>& FR 2749414 A & DE 19722741 A<br>& US 5852560 A | 3,55<br>1-2,4-41,<br>44-54,56-57 |
| X<br>A | JP 11-353384 A (NEC Corporation),<br>24 December, 1999 (24.12.99),<br>& EP 964349 A2 | 3<br>1-2,4-41,<br>44-57 |
| X<br>A | JP 2000-27684 A (Mitsubishi Electric Corporation),<br>08 February, 2000 (08.02.00)　(Family: none) | 3,55<br>1-2,4-41,<br>44-54,56-57 |
| A | Yoshikuni YASHIDA et al., "LCA no Kando Bunseki; Sangyou Bumon ni okeru Energy Shouhiryou no Futashikasa wo Kouryo shite", Dai 16 kai Energy, Keizai, Kankyou Conferrence Kouen Ronbunshuu, Vol. 16th, pp.16-66 28 January, 2000 (28.01.00) | 1-41,44-57 |

| ☐ | Further documents are listed in the continuation of Box C. | ☐ | See patent family annex. |
|---|---|---|---|

| | |
|---|---|
| *　Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>09 August, 2001 (09.08.01) | Date of mailing of the international search report<br>21 August, 2001 (21.08.01) |
|---|---|
| Name and mailing address of the ISA/<br>　Japanese Patent Office | Authorized officer |
| Facsimile No. | Telephone No. |

Form PCT/ISA/210 (second sheet) (July 1992)

## INTERNATIONAL SEARCH REPORT

| International application No. |
| --- |
| PCT/JP01/03723 |

**Box I     Observations where certain claims were found unsearchable (Continuation of item 1 of first sheet)**

This international search report has not been established in respect of certain claims under Article 17(2)(a) for the following reasons:

1.  ☒  Claims Nos.: 42,43
    because they relate to subject matter not required to be searched by this Authority, namely:

    The inventions of claims 42, 43 relate to schemes, rules, or methods of "doing business.

2.  ☐  Claims Nos.:
    because they relate to parts of the international application that do not comply with the prescribed requirements to such an extent that no meaningful international search can be carried out, specifically:

3.  ☐  Claims Nos.:
    because they are dependent claims and are not drafted in accordance with the second and third sentences of Rule 6.4(a).

**Box II     Observations where unity of invention is lacking (Continuation of item 2 of first sheet)**

This International Searching Authority found multiple inventions in this international application, as follows:

   See extra sheet.

1.  ☒  As all required additional search fees were timely paid by the applicant, this international search report covers all searchable claims.

2.  ☐  As all searchable claims could be searched without effort justifying an additional fee, this Authority did not invite payment of any additional fee.

3.  ☐  As only some of the required additional search fees were timely paid by the applicant, this international search report covers only those claims for which fees were paid, specifically claims Nos.:

4.  ☐  No required additional search fees were timely paid by the applicant. Consequently, this international search report is restricted to the invention first mentioned in the claims; it is covered by claims Nos.:

**Remark on Protest**     ☐     The additional search fees were accompanied by the applicant's protest.
                          ☒     No protest accompanied the payment of additional search fees.

Form PCT/ISA/210 (continuation of first sheet (1)) (July 1992)

## INTERNATIONAL SEARCH REPORT

International application No.

PCT/JP01/03723

Continuation of Box No. II of continuation of first sheet (1)

The inventions of claims 1-41 and 44-54 relate to an environment information evaluating device for accumulating environment information on parts from a part list listing parts constituting a product and calculating the evaluation value of the environment information on the product, an environment information simulation system, an environment information simulation method, a recorded medium on which a program for instructing a computer to execute processings is recorded, and a program.

The inventions of claims 55-57 relate to a design simulation system having a structure linked to a part information system, making a reference to parts environment information and part price information, and thereby selecting parts most suitable for a product.

The inventions of claims 55-57 do not involve the same or corresponding special technical features of the inventions of claims 1-41, 44-54, and therefore these groups of the inventions are not united into one invention nor so linked as to form a single general inventive concept.

Form PCT/ISA/210 (extra sheet) (July 1992)